# EUROPÄISCHE PATENTSCHRIFT

(11) **EP 2 601 317 B1**
(45) Veröffentlichungstag und Bekanntmachung des Hinweises auf die Patenterteilung: **17.12.2014**
(21) Anmeldenummer: 11741176.9
(22) Anmeldetag: 28.07.2011
(51) Int. Cl.: C08G 18/70, C07C 381/14, C14C 3/08, C14C 3/20, C14C 3/26, C08G 18/28, C14C 3/28

(54) **ZUSAMMENSETZUNGEN ENTHALTEND WENIGSTENS EINE CARBAMOYLSULFONATGRUPPEN-HALTIGE VERBINDUNG UND IHRE VERWENDUNG ALS GERBSTOFFE**
COMPOSITIONS COMPRISING AT LEAST ONE COMPOUND CONTAINING A CARBAMOYL SULFONATE GROUP AND USE OF THE SAME AS TANNING AGENTS
COMPOSITIONS CONTENANT AU MOINS UN COMPOSÉ RENFERMANT DES GROUPES CARBAMYLSULFONATE ET UTILISATION DE CELLES-CI COMME AGENTS DE TANNAGE

(30) Priorität: 06.08.2010 EP 10172191
(43) Veröffentlichungstag der Anmeldung: 12.06.2013
(73) Patentinhaber: LANXESS Deutschland GmbH, 50569 Köln (DE)
(72) Erfinder: REINERS, Jürgen, 51373 Leverkusen (DE); TYSOE, Christopher, 51375 Leverkusen (DE); WIECHMANN, Jan-Dieter, 51465 Bergisch Gladbach (DE); KRÜGER, Claudia, 51371 Leverkusen (DE); GROSCH, Rafael, 51373 Leverkusen (DE); HEINZELMANN, Franz, 51375 Leverkusen (DE); EBBINGHAUS, Michael, 51371 Leverkusen (DE); KLEBAN, Martin, 51377 Leverkusen (DE)
(86) Internationale Anmeldenummer: PCT/EP2011/063023
(87) Internationale Veröffentlichungsnummer: WO 2012/016907

(56) Entgegenhaltungen:
- EP-A1- 0 814 168
- EP-A2- 1 647 563
- WO-A1-98/14425

## Beschreibung

Die Erfindung betrifft wässrige Zusammensetzungen enthaltend wenigstens eine Carbamoylsulfonatgruppen-haltige Verbindung, ein modifiziertes Polyol und eine Hydroxy-polycarbonsäure oder deren Salze, ein Verfahren zur Herstellung sowie die Verwendung als Gerbstoff oder Vorgerbstoff.

Isocyanate und ihre Verwendung als Gerbstoffe sind prinzipiell bekannt und beschrieben z.B. in US-A 2 923 594 "method of tanning", US-A 4 413 997 "dicarbamoylsulfonate tanning agent" oder H. Träubel, Gerbungen mit Isocyanaten, 1. und 2. Teil, Das Leder, 1977, Seiten 150 ff und 181 ff.

Dabei hat sich gezeigt, dass nur Isocyanate mit relativ niedrigem Molekulargewicht in der Lage sind, die Kollagenmoleküle effektiv zu vernetzen und damit die Schrumpfungstemperatur des Leders zu erhöhen.

Diese Verbindungen können aber wegen ihrer toxikologischen Eigenschaften, dem hohen Dampfdruck und der geringen Wasserlöslichkeit nicht in üblichen Gerbapparaturen eingesetzt werden. Darüber hinaus reagieren Isocyanate in wässriger Lösung schnell über die Zwischenstufen Carbaminsäure und Amin zu einem polymeren Harnstoff, der keinerlei gerbende Wirkung aufweist. Daher ist eine temporäre Blockierung der Isocyanat-Funktion mit einer Schutzgruppe ratsam.

Die EP-A 0 690 135 und EP-A 0 814 168 beschreiben modifizierte Isocyanate, mit denen diese Probleme eingeschränkt werden können. Hierzu werden ausgewählte Isocyanate zuerst mit einem Polyetheralkohol umgesetzt und anschließend mit Bisulfit zur Carbamoylverbindung umgewandelt, die gegenüber der Reaktion mit Wasser weitgehend inert ist. Man erhält eine wässrige Dispersion mit einer für den Einsatz im Gerbprozess ausreichenden Stabilität. Dieser Prozess hat jedoch zwei schwerwiegende Nachteile:
- Die Umsetzung von Isocyanat mit Polyetheralkohol muss unter Ausschluss von Wasser und bevorzugt ohne viskositätserniedrigende Lösungsmittel durchgeführt werden und erfordert daher technisch hochwertige und teure Hardware sowie einen zusätzlichen Syntheseschritt.
- Durch die Reaktion des Polyetheralkohols mit dem Isocyanat wird ein Teil der Isocyanat-Funktionen verbraucht und somit die Gerbwirkung des Produktes reduziert.

Aus EP-A-1647563 sind wässrige Zusammensetzungen bekannt, enthaltend wenigstens eine Carbamoylsulfonatgruppen enthaltende Verbindung und wenigstens ein Alkoholalkoxylat.

Unter den dort beschriebenen Alkoholalkoxylaten sind alkoxylierte langkettige oder verzweigte Alkohole zu verstehen. Insbesondere werden verzweigte Fettalkoholethoxylate als Emulgatoren bevorzugt. Die erhaltenen Lösungen neigen allerdings bei erhöhter Umgebungstemperatur, zum Beispiel bei 30-40°C, zur Phasentrennung, die bei Abkühlung nicht reversibel ist. Bei der Anwendung der Produkte nach entsprechender Lagerdauer ist daher eine Homogenisierung erforderlich, die in der Praxis zusätzlichen Aufwand und besondere Sorgfalt erfordert. Die Wirksamkeit als Gerbstoff wird daher unter ungünstigen Lagerbedingungen nachteilig beeinflusst.

Es besteht daher weiterhin ein Bedarf nach alternativen Gerbstoffzubereitungen mit einer verbesserten Lagerstabilität.

Überraschend wurden nun spezielle Zusammensetzungen gefunden, enthaltend unter anderem eine Carbamoylsulfonatgruppen-haltige Verbindung, die diese Nachteile nicht aufweisen.

Die Erfindung betrifft daher eine wässrige Zusammensetzung, enthaltend
a) wenigstens eine Carbamoylsulfonatgruppen-haltige Verbindung,
b) wenigstens ein nicht-ionisches, Estergruppen-haltiges, alkoxyliertes Polyol mit einem HLB-Wert von wenigstens 13 (b1) und/oder ein Alkylglycosid (b2) und
c) eine Hydroxy-polycarbonsäure oder deren Salze, vorzugsweise Citronensäure, Milchsäure und/oder Weinsäure,
dadurch gekennzeichnet, dass als Carbamoylsulfonatgruppen-haltigen Verbindungen der Komponente a) Umsetzungsprodukte aus organischen Polyisocyanaten und Bisulfit und/oder Disulfit eingesetzt werden.

### Komponente a)

Unter Carbamoylsulfonatgruppen-haltigen Verbindungen werden solche mit folgender Struktureinheit verstanden:

-NH-CO-SO₃⁻K⁺

worin K⁺ ein Kationenäquivalent ist.

Als Carbamoylsulfonatgruppen-haltige Verbindungen der Komponente a) werden Umsetzungsprodukte aus wenigstens einem organischen Polyisocyanat und wenigstens einem Bisulfit und/oder Disulfit eingesetzt.

Dabei kommen als organische Polyisocyanate insbesondere aliphatische, cycloaliphatische, araliphatische, aromatische oder heterocyclische Polyisocyanate in Betracht, wie sie z.B. von W. Siefken in Liebigs Annalen der Chemie 562, Seiten 75 bis 136 beschrieben werden.

Bevorzugt sind organische Polyisocyanate mit einer NCO-Funktionalität von 1,8 bis 4,2 mit einer Molmasse von vorzugsweise unter 800 g/mol, insbesondere organische Polyisocyanate mit einer NCO-Funktionalität von 1,8 bis 2,5 und einer Molmasse unter 400 g/mol.

Bevorzugte Polyisocyanate sind Verbindungen der Formel Q(NCO)ₙ mit einem mittleren Molekulargewicht unter 800, worin n eine Zahl von wenigstens 1,8, vorzugsweise von 1,8 bis 4,2, Q einen aliphatischen C₄-C₁₂-Kohlenwasserstoffrest, einen cycloaliphatischen C₆-C₁₅-Kohlen-wasserstoffrest oder einen heterocyclischen C₂-C₁₂-Rest mit 1 bis 3 Heteroatomen aus der Reihe Sauerstoff, Schwefel, Stickstoff bedeuten, beispielsweise (i) Diisocyanate wie Ethylendiisocyanat, 1,4-Tetramethylendiisocyanat, 1,6-Hexamethylendiisocyanat, 1,12-Dodecandiisocyanat, 2-Isocyanatomethyl-1,8-octamethylendiisocyanat, 1,3-Diisocyanato-cyclobutan, 1-Isocyanato-2-isocyanatomethyl-cyclopentan, 1,3- und 1,4-diisocyanato-cyclohexan sowie beliebige Gemische dieser Isomeren, 1,2-, 1,3- und 1,4- Bis(isocyanatomethyl)-cyclohexan sowie beliebige Gemische dieser Isomeren, 1,2-, 1,3- und 1,4- Bis(isocyanatoethyl)-cyclohexan sowie beliebige Gemische dieser Isomeren, 1,2-, 1,3- und 1,4- Bis(isocyanato-n-propyl)-cyclohexan sowie beliebige Gemische dieser Isomeren, 1-Isocyanatopropyl-4-isocyanatomethyl-cyclohexan und Isomere, 1-Isocyanato-3,3,5-trimethyl-5-isocyanatomethyl-cyclohexan, 2,4- und 2,6-Hexahydrotoluylen-diisocyanat sowie beliebige Gemische dieser Isomeren, 2,4'- und 4,4'-Diisocyanato-dicyclohexyl-methan und Isomere, 1,3- und 1,4-Phenylen-diisocyanat, 2,4- und 2,6-Toluylendiisocyanat sowie beliebige Gemische dieser Isomeren, Diphenylmethan-2,4'- und/oder -4,4'-diisocyanat, Naphthalin-1,5-diisocyanat, Uretdiongruppen enthaltende Polyisocyanate wie z.B. das Bis(6-isocyanatohexyl)-uretdion oder das die Uretdion-Struktur enthaltende Dimere des 1-Isocyanato-3,3,5-trimethyl-5-isocyanato-methylcyclohexans und beliebige Mischungen der vorgenannten Polyisocyanate; (ii) tri- und höherfunktionelle Polyisocyanate wie die Isomeren der Triisocyanatotriphenylmethanreihe (wie Triphenylmethan-4,4',4"-trisocyanat) und ihre Gemische; (iii) durch Allophanatisierung, Trimerisierung oder Biuretisierung aus den Polyisocyanaten (i) und/oder (ii) hergestellte Verbindungen, die mindestens 2,7 Isocyanatgruppen pro Molekül aufweisen. Beispiele für durch Trimerisierung hergestellte Polyisocyanate sind das durch Isocyanurat-Bildung erhältliche Trimerisat des 1-Isocyanato-3,3,5-trimethyl-5-isocyanatomethylcyclohexans und die durch Trimerisierung von Hexamethylendiisocyanat, gegebenenfalls im Gemisch mit 2,4'-Diisocyanatotoluol, erhältlichen Isocyanuratgruppen enthaltenden Polyisocyanate. Beispiele für durch Biuretisierung hergestellte Polyisocyanate sind Tris-(isocyanatohexyl)biuret und dessen Gemische mit seinen höheren Homologen, wie sie z.B. gemäß DE-OS 23 08 015 zugänglich sind. Besonders bevorzugt sind Diisocyanate.

Besonders bevorzugte Polyisocyanate sind solche mit einem Molekulargewicht von weniger als 400 g/mol mit an Aliphaten oder Cycloaliphaten gebundenen NCO-Gruppen, wie z.B. 1,4-Diisocyanatobutan, 1,6-Diisocyanatohexan (HDI), 1,5-Diisocyanato-2,2-dimethylpentan, 2,2,4-bzw. 2,4,4-Trimethyl-1,6-diisocyanatohexan (TMHI), 1,3- und 1,4-Diisocyanatohexan, 1,3- und 1,4-diisocyanato-cyclohexan (CHDI) sowie beliebige Gemische dieser Isomeren, 1-Isocyanato-2-isocyanatomethyl-cyclopentan, 1,2-, 1,3- und 1,4- Bis(isocyanatomethyl)-cyclohexan sowie beliebige Gemische von Isomeren, 1,2-, 1,3- und 1,4- Bis(isocyanatoethyl)-cyclohexan sowie beliebige Gemische dieser Isomeren, 1,2-, 1,3- und 1,4- Bis(isocyanato-n-propyl)-cyclohexan sowie beliebige Gemische dieser Isomeren, 1-Isocyanatopropyl-4-isocyanatomethyl-cyclohexan und Isomere, 1-Isocyanato-3,3,5-trimethyl-5-isocyanatomethyl-cyclohexan (IPDI), 1-Isocyanato-1-methyl-4-isocyanatomethyl-cyclohexan (IMCI), 2,4'- und 4,4'-Diisocyanatodicyclohexyl-methan (H₁₂MDI) und Isomere, Dimeryl-diisocyanat (DDI), Bis(isocyanatomethyl)-bicyclo[2.2.1]heptan (NBDI), Bis(isocyanatomethyl)-tricyclo[5.2.1.0^{2,6}]decan (TCDDI) und Isomere und beliebige Gemische solcher Diisocyanate. Auch araliphatische Polyisocyanate wie die Xylylendiisocyanate der Formeln 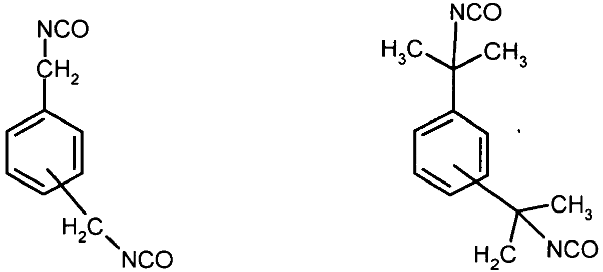 können verwendet werden.

Bevorzugt verwendet werden obige Diisocyanate. Man kann aber auch monofunktionelle aliphatische Isocyanate wie beispielsweise Butylisocyanat, Hexylisocyanat, Cyclohexylisocyanat, Stearylisocyanat oder Dodecylisocyanat und/oder Polyisocyanate mit einer durchschnittlichen NCO-Funktionalität von 2,2 bis 4,2 mitverwenden.

Bevorzugt handelt es sich bei den höherfunktionellen Polyisocyanaten um im wesentlichen aus trimerem 1,6-Diisocyanatohexan, trimerem 1,2-, 1,3- oder 1,4-Bis(isocyanatomethyl) cyclohexan, trimerem 1,2-, 1,3- oder 1,4- Bis(isocyanatoethyl)-cyclohexan, trimerem 1,2-, 1,3- oder 1,4-Bis(isocyanato-n-propyl)-cyclohexan, trimerem 1-Isocyanatopropyl-4-isocyanatomethyl-cyclohexan und Isomeren, oder trimerem 1-Isocyanato-3,3,5-trimethyl-5-isocyanatomethyl-cyclohexan und gegebenenfalls dimerem 1,6-Diisocyanatohexan, dimerem 1,2-, 1,3- oder 1,4-Bis(isocyanatomethyl) cyclohexan, dimerem 1,2-, 1,3- oder 1,4- Bis(isocyanatoethyl)-cyclohexan, dimerem 1,2-, 1,3- oder 1,4- Bis(isocyanato-n-propyl)-cycloheacan, dimerem 1-Isocyanatopropyl-4-isocyanatomethyl-cyclohexan und Isomere, oder dimerem 1-Isocyanato-3,3,5-trimethyl-5-isocyanatomethyl-cyclohexan und den entsprechend höheren Homologen bestehenden Isocyanuratgruppen und gegebenenfalls Uretdiongruppen aufweisenden Polysocyanatgemischen mit einem NCO-Gehalt von 19 bis 24 Gew.-%, wie sie durch an sich bekannte katalytische Trimerisierung und unter Isocyanurat-Bildung von 1,6-Diisocyanatohexan, 1,2-, 1,3- oder 1,4-Bis(isocyanatomethyl) cyclohexan, 1,2-, 1,3- oder 1,4-Bis(isocyanatoethyl)-cyclohexan, 1,2-, 1,3- oder 1,4- Bis(isocyanato-n-propyl)-cyclohexan, 1-Isocyanatopropyl-4-isocyanatomethyl-cyclo-hexan und Isomeren, oder von 1-Isocyanato-3,3,5-trimethyl-5-isocyanatomethylcyclohexan erhalten werden und die vorzugsweise eine (mittlere) NCO-Funktionalität von 3,2 bis 4,2 aufweisen.

Weitere geeignete Polyisocyanate sind durch Modifizierung aliphatischer oder cycloaliphatischer Diisocyanate hergestellte Polyisocyanate mit Uretdion- und/oder Isocyanurat-, Urethan- und/oder Allophanat-, Biuret- oder Oxadiazinstruktur, wie sie beispielsweise in den DE-A 1 670 666, DE-A 3 700 209 und DE-A 3 900 053 und in den EP-A 336 205 und EP-A 339 396 beispielhaft beschrieben sind. Geeignete Polyisocyanate sind z.B. auch die estergruppenhaltigen Polyisocyanate, wie z.B. die durch Umsetzung von Pentaerythrit- oder Trimethylolpropan-silylethem mit Isocyanatocapronsäurechlorid zugänglichen Tetrakis- bzw. Triisocyanate (vgl. DE-A 3 743 782). Außerdem ist es auch möglich, Triisocyanate wie z.B. Tris-isocyanatodicyclohexylmethan zu verwenden.

Die Verwendung von monofunktionellen und von mehr als difunktionellen Isocyanaten wird in beiden Fällen vorzugsweise auf Mengen von je maximal 10 Mol-%, bezogen auf sämtliche Polyisocyanate, beschränkt.

Ganz besonders bevorzugt sind jedoch die oben genannten aliphatischen, cycloaliphatischen und araliphatischen Diisocyanate. Besonders bevorzugt sind Hexamethylendiisocyanat (HDI), Diisocyanato-cyclohexan, 1,2-, 1,3- und 1,4- Bis(isocyanatomethyl)-cyclohexan sowie beliebige Gemische von Isomeren, 1,2-, 1,3- und 1,4- Bis(isocyanatoethyl)-cyclohexan sowie beliebige Gemische dieser Isomeren, 1,2-, 1,3- und 1,4- Bis(isocyanato-n-propyl)-cyclohexan sowie beliebige Gemische dieser Isomeren, 2,4'- und 4,4'-Diisocyanato-dicyclohexylmethan, 1-Isocyanatopropyl-4-isocyanatomethyl-cyclohexan und Isomere und 1-Isocyanato-3,3,5-trimethyl-5-isocyanatomethylcyclohexan (IPDI).

Als Bisulfite und/oder Disulfite kommen vorzugsweise deren Alkali- oder Ammoniumsalze, insbesondere die Natriumsalze der schwefeligen bzw. dischwefeligen Säure, d.h. Natriumhydrogensulfit (NaHSO₃) bzw. Natriumdisulfit (Na₂S₂O₅) in Frage.

Vorteilhaft verwendet werden können auch die anderen Alkali- und Ammoniumsalze dieser Säuren, nämlich Kaliumbisulfit, Kaliumdisulfit, Lithiumbisulfit, Lithiumdisulfit, Ammoniumbisulfit, Ammoniumdisulfit sowie einfache Tetraalkylammoniumsalze dieser Säuren wie beispielsweise Tetramethylammonium-bisulfit, Tetraethylammonium-bisulfit usw. Zur Blockierung werden die Salze bevorzugt als wässrige Lösungen mit Festkörpergehalten von 5 bis 40 Gew.-% eingesetzt.

In einer bevorzugten Ausführungsform der Erfindung beruhen die Carbamoylgruppen-haltigen Verbindungen auf aliphatischen Polyisocyanaten wie Hexamethylendiisocyanat, Isophorondiisocyanat, Bis(isocyanato)cyclohexan, 1,2-, 1,3- und 1,4- Bis(isocyanatomethyl)-cyclohexan sowie beliebige Gemische von Isomeren, 1,2-, 1,3- und 1,4- Bis(isocyanatoethyl)-cyclohexan sowie beliebige Gemische dieser Isomeren, 1,2-, 1,3- und 1,4- Bis(isocyanato-n-propyl)-cyclohexan sowie beliebige Gemische dieser Isomeren, 1-Isocyanatopropyl-4-isocyanatomethyl-cyclohexan und Isomere, 2,4'- und 4,4'-Diisocyanato-dicyclohexylmethan oder Nonyltriisocyanat sowie Mischungen hieraus, insbesondere aber Hexamethylendiisocyanat 1,2-, 1,3- und 1,4-Bis(isocyanatomethyl)-cyclohexan sowie beliebige Gemische von Isomeren, 1,2-, 1,3- und 1,4-Bis(isocyanatoethyl)-cyclohexan sowie beliebige Gemische dieser Isomeren, 1,2-, 1,3- und 1,4-Bis(isocyanato-n-propyl)-cyclohexan sowie beliebige Gemische dieser Isomeren und/oder Isophorondiisocyanat, besonders bevorzugt Hexamethylendiisocyanat, Isophorondiisocyanat, 1,3-Bis(isocyanatomethyl)cyclohexan und 2,4'- und 4,4'-Diisocyanato-dicyclohexylmethan.

### Komponente b)

### Komponente b1)

Die bevorzugten nicht-ionischen, Estergruppen-haltigen, alkoxylierten Polyole der Komponente b1) weisen einen HLB-Wert von 13 bis 19, insbesondere von 14 bis 18 auf, wobei der HLB-Wert bestimmt wird nach der Methode nach Griffin, W. C.: Classification of surface active agents by HLB, J. Soc. Cosmet. Chem. 1, 1949. Bevorzugte Verbindungen der Komponente (b1) weisen zudem eine Wasserlöslichkeit bei 20 °C von wenigstens 10 g pro Liter, insbesondere wenigstens 20 g pro Liter auf.

Als bevorzugte Verbindungen der Komponente b1) sind solche geeignet, die in an sich bekannter Weise aus Polyolen durch Alkoxylierung und partielle Veresterung der Hydroxylgruppen mit einer Carbonsäure erhältlich sind. Als geeignete Ausgangspolyole können beispielsweise mehrwertige (cyclo)aliphatische Alkohole wie Glycerin, Trimethylolpropan, Pentaerythrit, Dipentaerythrit, von Mono- oder Polysacchariden abgeleitete Polyole, vorzugsweise des Molekulargewichts von 92 bis 2000 als Startermoleküle eingesetzt werden. Besonders bevorzugte Starteralkohole sind Polyole mit 3 bis 10 Hydroxylgruppen, insbesondere Glycerin und solche mit Sorbitan-Grundgerüst, insbesondere von 1,4- oder 1,5-Sorbitan, bevorzugt von 1,4-Sorbitan.

Bevorzugte wässrige Zusammensetzungen sind dadurch gekennzeichnet, dass es sich bei der Verbindung der Komponente b1) um das Reaktionsprodukt eines Polyols mit wenigstens einem Alkylenoxid mit 2 bis 6 Kohlenstoffatomen, vorzugsweise in einer Menge von 10 bis 60 MolÄquivalenten, bezogen auf das Polyol und anschließender Umsetzung mit wenigstens einer Carbonsäure mit 6 bis 30 C-Atomen handelt. Bei dem eingesetzten Polyol handelt es sich vorzugsweise um ein Polyol aus der Gruppe bestehend aus Glycerin, Trimethylolpropan, Pentaerythrit, Dipentaerythrit, und von Mono- und Polysacchariden abgeleitete Polyole, insbesondere Sorbit und Polyole mit Sorbitan-Grundgerüst.

Besonders bevorzugt handelt es sich bei den Verbindungen der Komponente b1) um partiell veresterte Sorbitan-Alkoxylate, deren Hydroxylgruppen vor oder vorzugsweise nach der Alkoxylierung mit Carbonsäuren mit einer Kettenlänge von 6 bis 30 Kohlenstoffatomen verestert sind, wobei jede Hydroxylgruppe des Grundpolyols eine voneinander unabhängige Anzahl von Alkoxy-Einheiten aufweisen kann und pro Sorbitan-Einheit im Mittel 10 bis 60 Alkoxy-Einheiten vorhanden sind. Die bevorzugten veresterten Sorbitan-Alkoxylate weisen eine statistische Verteilung der Alkoxygruppen auf.

Bevorzugt werden partiell veresterte alkoxylierte Sorbitan-Derivate durch Umsetzung von einem Sorbitan der Formel

X-(OH)ₘ

worin
X ein Sorbitanrest, insbesondere ein 1,4-Sorbitanrest ist und
m für die Zahl 4 steht
mit
10 bis 60 Äquivalenten, pro Mol Sorbitan, bevorzugt 10 bis 40, besonders bevorzugt 10 bis 30 und ganz besonders bevorzugt 15 bis 25 Äquivalenten gleicher oder verschiedener C₂-C₆-Alkylenoxide, insbesondere C₂- und/oder C₃-Alkylenoxide, vorzugsweise Ethylenoxid und mit
1 bis 3, vorzugsweise 0,8 bis 1,2 Äquivalenten, bezogen auf das Sorbitan, einer aliphatischen, ggf. ungesättigten Carbonsäure, vorzugsweise mit einer Kettenlänge von 6 bis 30 Kohlenstoffatomen, die unsubstituiert oder durch Hydroxygruppem substituiert ist, vorzugsweise geradkettig ist, in beliebiger Reihenfolge hergestellt. Bevorzugt erfolgt zuerst die Umsetzung mit dem Alkylenoxid und anschließend die Reaktion mit der Carbonsäure.

Bevorzugt sind Sorbitan polyoxyethylen monoester, welche mit 10-60 mol Ethylenoxid-Einheiten pro Sorbitan-Einheit alkoxyliert sind, und vorzugsweise ein 1,4-Sorbitan-Grundgerüst aufweisen.

Diese entsprechen vorzugsweise den folgenden Strukturformeln, in denen
R für einen ggf. durch Hydroxylgruppen substituierten Alkyl- oder Alkenylrest der Carbonsäure steht und m, n, p und q unabhängig voneinander sind, statistische Werte sind und jeweils für eine Zahl von 0 bis 60 stehen,
mit der Maßgabe, dass die Summe der Anzahl der Oxyethylen-Einheiten m+n+p+q von 10 bis 60, vorzugsweise 18 bis 22, insbesondere 20 ist.

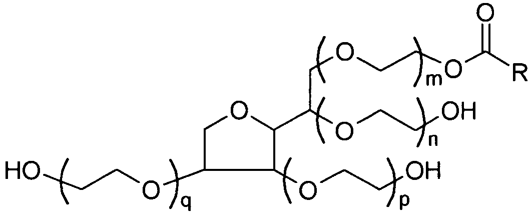

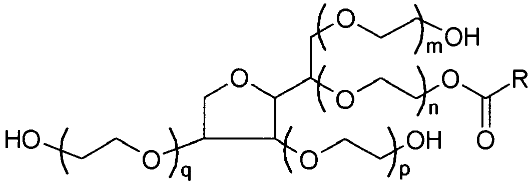

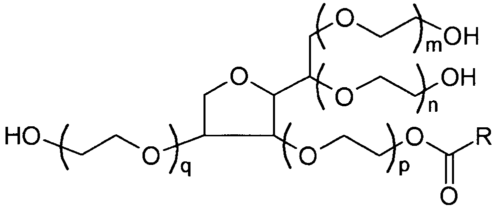

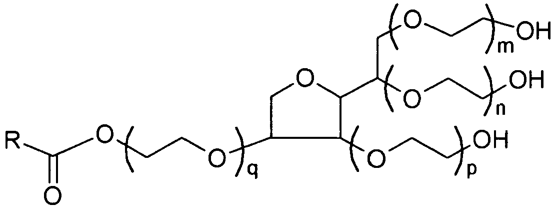

Ebenfalls sind auch entsprechende alkoxylierte Sorbitandiester sowie deren Gemische geeignet.

Weiterhin sind alkoxylierte Sorbitanester geeignet, bei denen eine Hydroxylgruppe der Sorbitan-Einheit, insbesondere in den oben angegebenen Formeln direkt mit der Carbonsäure verestert ist, d.h. bei der sich keine Alkylenoxid-Einheit zwischen der Sorbitan-Einheit und dem Carbonsäurerest befindet und die drei nicht acylierten Hydroxylgruppen mit einer entsprechend höheren Anzahl an Alkylenoxid-Einheiten verethert sind. Solche Verbindungen sind beispielsweise dadurch zugänglich dass man das Sorbitan zunächst mit einer Carbonsäure verestert und das erhaltene Produkt, bestehend aus einer Mischung der isomeren Monoester, die bei einem Überschuss an Carbonsäure ausserdem Gemische der isomeren Diester enthalten kann, anschliessend alkoxyliert.

Das zur Alkoxylierung des Sorbitans eingesetzte Alkylenoxid ist bevorzugt ausgewählt aus der Gruppe bestehend aus Ethylenoxid, Propylenoxid und Butylenoxid. Dabei ist es auch möglich, dass das Sorbitan mit verschiedenen der genannten Alkylenoxide, z.B. Ethylenoxid und Propylenoxid, umgesetzt wird, wobei Sorbitan -Alkoxylate erhalten werden können, die jeweils Blöcke aus mehreren Einheiten eines Alkylenoxids, z.B. Ethylenoxid, neben Blöcken aus mehreren Einheiten eines anderen Alkylenoxids, z.B. Propylenoxid, aufweisen. Besonders bevorzugt enthalten die Sorbitan-Alkoxylate Ethylenoxid (EO)-Einheiten, vorzugsweise ausschließlich. In einem solchen Fall ist das eingesetzte Alkylenoxid besonders bevorzugt Ethylenoxid.

Des Weiteren ist es möglich, bei der Umsetzung eines Sorbitans mit verschiedenen der genannten Alkylenoxid, z.B. Ethylenoxid und Propylenoxid, Sorbitan-Alkoxylate zu erhalten, in denen der Einbau der verschiedenen Alkylenoxide statistisch erfolgt. Die Einsatzmengen an Alkylenoxid betragen vorzugsweise 10 bis 60 Mol Alkylenoxid pro Mol Sorbitan, bevorzugt 10 bis 40 Mol, besonders bevorzugt 10 bis 30 Mol und ganz besonders bevorzugt 15 bis 25 Mol. Ganz bevorzugtes Alkylenoxid ist Ethylenoxid.

Die zur Veresterung des Ausgangspolyols, besonders des Sorbitan-Alkoxylats geeigneten Carbonsäuren sind vorzugsweise gesättigt oder ungesättigt und linear oder verzweigt und können ggf. durch Hydroxylgruppen substituiert sein. Beispielsweise seien folgende Carbonsäuren genannt: Hexansäure, Heptansäure, Octansäure, Nonansäure, Decansäure, Undecansäure, Dodecansäure, Tridecansäure, Tetradecansäure, Pentadecansäure, Hexadecansäure, Heptadecansäure, Octadecansäure, Nonadecansäure, Eicosansäure, Octadecensäure (Ölsäure), Undecensäure. Besonders bevorzugt sind Decansäure, Undecansäure, Dodecansäure (Laurinsäure), Tetradecansäure, Hexadecansäure (Palmitinsäure) und Octadecansäure (Stearinsäure), Ricinolsäure. Ganz besonders bevorzugt sind Dodecansäure (Laurinsäure), Hexadecansäure (Palmitinsäure) und Octadecansäure (Stearinsäure) und Octadecensäure (Ölsäure).

Als Verbindungen der Komponente b1) können bspw. handelsübliche Produkte eingesetzt werden, wie bspw. Sorbitan-polyoxyethylen-(20)-monolaurat (beispielsweise Polysorbat® 20 oder Tween® 20 (Croda Oleochemicals) oder Eumulgin® SML 20 (Cognis)), Sorbitan polyoxyethylen (20) monopalmitat (beispielsweise Polysorbat 40 oder Tween® 40 (Croda Oleochemicals)), Sorbitan polyoxyethylen (20) monostearat (beispielsweise Polysorbat 60 oder Tween® 60 (Croda Oleochemicals) oder Eumulgin® SMS 20 (Cognis)), Sorbitan polyoxyethylen (20) monooleat (beispielsweise Polysorbat 80 oder Tween® 80 (Croda Oleochemicals)).

Weitere bevorzugte Verbindungen der Komponente b1) sind beispielsweise Alkoxylate von Mono- und Polyglycerinestern. Die Herstellung solcher alkoxylierten (Poly)glycerinester erfolgt entweder durch Alkoxylierung von Glycerin oder eines Polyglycerins und anschließende Veresterung mit einer Fettsäure oder durch Veresterung des Glycerins oder Polyglycerins mit einer Fettsäure und anschließende Alkoxylierung. Für die erfindungsgemäßen Zusammensetzungen sind insbesondere Alkoxylate von Mono- und Polyglycerinestern geeignet, die einen HLB-Wert von wenigstens 13 aufweisen und vorzugsweise eine Wasserlöslichkeit bei 20 °C von mehr als 10 g pro Liter besitzen. Geeignet sind weiterhin alkoxylierte Glycerinester oder Polyglycerinester, die mit mehr als einer Carbonsäure verestert sind. Besonders bevorzugt sind alkoxylierte Monoglycerin-Monoester.

Zur Alkoxylierung geeignet sind C₂ bis C₆-Alkylenoxide, besonders bevorzugt Ethylenoxid. Bevorzugt ist eine Alkoxylierung mit 10 bis 100 Alkylenoxideinheiten, insbesondere mit 20 bis 60 Alkylenoxid-Einheiten. Die Hydroxylgruppen des Glycerins oder des Polyglycerins weisen unabhängig voneinander im Mittel eine unterschiedliche Anzahl von Alkylenoxid-Einheiten auf.

Beispielsweise seien als besonders geeignete Alkoxylate von Mono- und Polyglycerinestern. genannt: Glycerinmonostearat-Ethoxylate mit im Mittel 15 bis 30, insbesondere mit im Mittel 20 EO-Einheiten, Glycerinmonooleat-Ethoxylate mit 20 bis 40 EO-Einheiten, Diglycerinmonostearat mit 20 bis 40 EO-Einheiten, Polyglycerin-monostearat mit 20 bis 40 EO-Einheiten, Ricinusöl-Alkoxylate und hydrierte Ricinusöl-Alkoxylate, kurz (hydrierte) Ricinusöl-Alkoxylate. Es handelt sich bei letzteren um Produkte, die durch Alkoxylierung von Ricinusöl oder hydriertem Ricinusöl mit Alkylenoxiden, insbesondere Ethylenoxid und Propylenoxid, erhältlich sind, bevorzugt sind solche, die 20 bis 100 Alkylenoxid-Einheiten pro (hydrierte) Ricinusöl-Einheit, bevorzugt 20 bis 60 Ethylenoxid-Einheiten pro (hydrierte) Ricinusöl-Einheit aufweisen.

Entsprechende Glycerin-basierte Verbindungen der Komponenten b1) sind ebenfalls als Handelsprodukte verfügbar, beispielsweise Glycerinmonostearat-Ethoxylat mit im Mittel 20 EO-Einheiten als Cutina® E 24 (Cognis), hydriertes Ricinusöl Ethoxylat mit im Mittel 40 EO-Einheiten als Eumulgin® HRE 40 (Cognis).

### Komponente b2)

Als bevorzugte Verbindungen der Komponente b2) sind beispielsweise Alkylmonoglykoside, Alkyldiglykoside, Alkyltriglykoside und höhere Homologe, hier allgemein als Alkylglykoside bezeichnet, insbesondere Monoglucoside, Diglucoside, Triglucoside, oder höhere Homologe und deren Gemische, zu nennen, deren Hydroxylgruppen partiell mit C₆-C₁₈-Alkylgruppen substituiert sind. Bevorzugt sind Mischungen aus Mono-, Di-, Triglucosiden und höheren Homologen mit C₆-C₁₈-Alkylgruppen, und einem Polymerisationsgrad (DP) von 1 bis 5. Besonders bevorzugt sind Alkylglucoside, deren Alkylgruppen eine Kettenlänge von 6 bis 18 C-Atomen, insbesondere 6 bis 12 C-Atomen, aufweisen. Weiterhin bevorzugt sind Alkylglucoside, deren Alkylgruppen eine Kettenlängenverteilung aufweisen oder Mischungen von Alkylglucosiden mit unterschiedlichen Alkylketten darstellen.

Alkylglykoside sind bevorzugt Substanzen, welche aus einem einzelnen Ring eines Zuckers oder einer Kette von Ringen eines Zuckers bestehen, welche mit glycosidischen Bindungen miteinander verknüpft sind, wobei der letzte Ring der glycosidischen Kette mit einem Alkohol acetalisiert ist. Alkylglycoside haben die folgende allgemeine Formel

H-(G)_{w}-O-R'

wobei
- G: für eine glycosidische Einheit steht,
- R': für den Alkylrest eines Alkohols steht, der zur Bildung des glycosidischen Acetals verwendet wird, und
- w: für den mittleren Polymerisationsgrad, d. h. die Anzahl an verknüpften glycosidischen Einheiten steht und für eine Zahl von 1 bis 5 steht.

Geeignet sind Alkylglycoside, bei welchen w für eine Zahl von 1 bis 5 steht und R für den Rest eines linearen oder verzweigten aliphatischen Alkohols mit 6 bis 30 C-Atomen steht. Diese Produkte sind an sich bekannt und handelsüblich. Der Wert w kann bei der Synthese dadurch beeinflusst werden, dass man das Molverhältnis von Alkohol zu Saccharid entsprechend einstellt. Durch ein Erhöhen dieses Verhältnisses werden Alkylglykoside mit einem niedrigeren Durchschnittswert von w erhalten. Umgekehrt wird ein höherer Polymerisationsgrad durch ein niedriges Molverhältnis Alkohol zu Saccharid erreicht.

Beispielsweise sei die Struktur eines Alkylglucosids aufgerührt, wobei R' für einen Alkylrest steht und v Werte von 1 bis 4 annimmt:

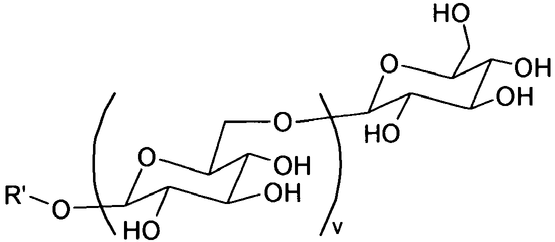

Die Verbindungen liegen in der Regel als Isomerengemische vor. Insbesondere die anomeren Kohlenstoffatome (glykosidische C-Atome) liegen als Gemische der Stereoisomeren vor.

Die bevorzugten Alkylpolyglucoside stellen je nach Molverhältnis der Einsatzstoffe und in Abhängigkeit von den Verfahrensbedingungen Gemische aus Alkylmonoglucosid, Alkyldiglucosid und Alkyltriglucosid und ggf. Alkyl-oligoglucosid dar, die ggf. noch (Poly)glucosen und geringe Anteile des freien Alkohols R'OH enthalten.

Die Herstellung von Alkylpolyglucosiden ist zum Beispiel durch eine direkte Synthese ausgehend von Zucker mit einem Überschuss an einem Alkohol oder mehreren Alkoholen möglich. Bei einem alternativen Syntheseverfahren geht man von Stärke aus, die zunächst mit niederen Alkoholen (z.B. Methanol, Ethanol, Butanol) in Gegenwart eines sauren Katalysators zu einem Alkylglucosid mit einer kurzkettigen glycosidischen Gruppe (z.B. Methyl, Ethyl, Butyl) umgesetzt wird. Dieses Zwischenprodukt wird anschließend unter Vakuum mit dem langkettigen Alkohol R'-OH in Gegenwart einer Säure als Katalysator durch Umacetalisierung umgesetzt, wobei das Gleichgewicht durch Abdestillieren des niederen Alkohols verschoben wird. Beispielsweise ist die Herstellung von Alkylglucosiden in WO90/001489, US 5576425, DE 69824366 oder in einer Publikation von M. Biermann (Henkel KGaA), K. Schmid, P. Schulz in Starch - Stärke, vol. 45(8), p. 281-288 (1993) beschrieben.

Als besonders bevorzugte Alkylglucoside kommen insbesondere Hexylglucosid, Octylglucosid, Decylglucosid, Undecylglucosid, und Dodecylglucosid sowie deren Homologe sowie die Mischung aus Alkyl-Mono-, Di-, Tri-, und ggf. Polyglucosid und Gemische aus dieser Reihe in Frage.

Weiterhin geeignet sind Alkylglykoside, deren Zuckerrest aus verschiedenenen Zucker-Einheiten aufgebaut ist. Besonders bevorzugt sind aber Alkylglykoside, die ausschliesslich aus Glucose-Einheiten aufgebaut sind.

Die Verbindungen der Komponente b2) sind als Handelsprodukte erhältlich: zum Beispiel ist ein C₈-C₁₀-Alkylpolyglucosid mit einem Polymerisationsgrad (DP = degree of polymerisation) von 1,6 unter dem Handelsnamen Glucopon® 215 CS UP (Cognis) erhältlich. Ein C₁₂-C₁₆-Alkylpolyglucosid mit einem Polymerisationsgrad DP von 1,4 ist zum Beispiel unter dem Handelsnamen Glucopon® 600 CS UP (Cognis) erhältlich.

Alkylpolyglucosid mit einem Polymerisationsgrad DP von 1,4 ist zum Beispiel unter dem Handelsnamen Glucopon® 600 CS UP (Cognis) erhältlich.

### Weitere Zusatzstoffe

Die wässrige Zusammensetzung enthält als weiteren Zusatzstoff eine Hydroxy-polycarbonsäure der Komponente c) oder deren Salze.

### Komponente c)

Komponente c) sind Hydroxy-polycarbonsäuren. Beispielsweise seien genannt: Ameisensäure, Essigsäure, Oxalsäure, Glyoxylsäure, Malonsäure, Milchsäure, Weinsäure, Maleinsäure, Glutarsäure, Phthalsäure, Adipinsäure, Äpfelsäure, Citronensäure, oder Polycarbonsäuren wie (Co)-Polymerisate von (Meth)acrylsäure, Maleinsäure, Crotonsäure oder Itaconsäure oder deren Derivaten mit ggf. weiteren Monomeren wie Ethen, Propen, Styrol, Hydroxyethylmethacrylat, Hydroxypropylmethacrylat, Hydroxyethylacrylat, Hydroxypropylacrylat, 4-Hydroxybutylvinylether, insbesondere solche, die eine mittlere Molmasse (Gewichtsmittel Mw) von 500 bis 100000 g/mol, insbesondere 500 bis 30000 g/mol aufweisen. Besonders bevorzugte Carbonsäuren der Komponente c) sind Citronensäure, Weinsäure und Milchsäure.

Die wässrige Zusammensetzung kann zudem weitere Zusatzstoffe enthalten, wobei die Menge dieser Zusatzstoffe inklusive die der Komponente c) vorzugsweise bis zu 30 Gew.-% beträgt.

Bevorzugt beträgt das Gewichtsverhältnis der Komponente a) zu b) 1:1 bis 500:1, insbesondere 5:1 bis 400:1.

Als bevorzugte weitere Zusatzstoffe können vorzugsweise Substanzen aus den Gruppen der synthetischen Gerbstoffe wie Harzgerbstoffe, polymere Nachgerbstoffe und vegetabile Gerbstoffe, Fettungsmittel und Puffer und/oder Füllstoffe zugesetzt werden, um den Gerbprozess zu vereinfachen und die Qualität des Leders zu erhöhen.

Bei den für diesen Einsatz geeigneten synthetischen Gerbstoffen handelt es sich z. B. um wasserlösliche Kondensationsprodukte aus sulfonierten Aromaten, Formaldehyd oder Glutardialdehyd und gegebenenfalls weiteren Substanzen aus den Gruppen der Aromaten, Harnstoff, oder Harnstoffderivaten. Bevorzugt sind hier Produkte basierend auf die Kondensation von Naphthalinsulfonsäuren, Ditolylethersulfonsäuren, Phenolsulfonsäuren, Dihydroxy-diphenylsulfon und Phenol sowie Kombinationen aus diesen Rohstoffen mit Formaldehyd oder Glutardialdehyd und gegebenenfalls Harnstoff oder Harnstoffderivaten.

### Komponente c)

Ebenfalls geeignete synthetische Gerbstoffe sind Polykondensate auf Basis von Dihydroxydiphenylsulfon / Naphthalinsulfonsäure und Formaldehyd, Dihydroxy-diphenylsulfon / Ditolylethersulfonsäure und Formaldehyd, Dihydroxydiphenylsulfon / Phenolsulfonsäure / Ditolylethersulfonsäure / Harnstoff und Formaldehyd (handelsübliche Gerbstoffe wie beispielsweise TANIGAN® BN, TANIGAN® PR, TANIGAN® 3LN, TANIGAN® HO, TANIGAN® UW der Fa. Lanxess oder Mischungen daraus).

Vegetabile Gerbstoffe sind aus pflanzlichen Quellen gewonnene Gerbstoffe aus den Klassen der kondensierten Gerbstoffe bzw. hydrolysierbaren Gerbstoffe z. B. Kastanienextrakt, Mimosa, Tara oder Quebracho. Als vegetabile Gerbstoffe kommen auch solche in Betracht, die aus pflanzlichen Quellen wie Algen, Früchten, z.B. Rhabarber, Oliven, Pflanzenteilen wie Blättern, Baumrinden, Wurzeln, Hölzern ggf. nach einer chemischen bzw. enzymatischen Modifizierung und/oder durch extraktive Methoden erhalten werden können.

Bei den für die Anwendung bevorzugten polymeren Nachgerbstoffen handelt es sich um hochmolekulare wasserlösliche oder in Wasser dispergierbare Produkte z. B. aus der (Co-) Polymerisationsreaktion ungesättigter Säuren und deren Derivate mit z. B. füllender oder fettender Wirkung auf Leder. Bevorzugt sind (Co)polymerisationsprodukte der Acryl- und Methacrylsäure sowie deren Ester.

Auch Harzgerbstoffe kommen als synthetische Gerbstoffe in Betracht und sind vorzugsweise Polykondensate auf Basis von Melamin, Dicyandiamid, Harnstoff oder Mischungen daraus mit Formaldehyd oder Glutardialdehyd.

In einer weiteren bevorzugten Ausführungsform enthalten die gepufferten oder ungepufferten erfindungsgemäßen Zusammensetzungen 5 bis 30 Gew.-%, vorzugsweise 10 bis 25 Gew.-% synthetische Gerbstoffe.

Fettungsmittel sind vorzugsweise Substanzen basierend auf biologischen, mineralen oder synthethischen Ölen, die zur Verbesserung der Einsetzbarkeit in Wasser mit hydrophilen Gruppen versehen werden können z. B. durch vollständige oder partielle Sulfatierung, Sulfitierung, Carboxylierung oder Phosphatierung.

Als Füllstoffe kommen bevorzugt inerte anorganische Salze sowie organische Polymere in Frage, z. B. Sulfate wie Natriumsulfat oder Calciumsulfat, Talkum, Siliciumoxid-Verbindungen, Stärke oder Ligninsulfonate.

Die erfindungsgemäßen wässrigen Zusammensetzungen weisen vorzugsweise einen pH-Wert von 1 bis 5, bevorzugt von 2,0 bis 3,5 auf.

Zur Einstellung dieses pH-Wertes ist es vorteilhaft, die Zusammensetzung durch Zugabe einer ausreichenden Menge einer puffernden Substanz auf den geeigneten pH-Bereich, insbesondere einen pH-Bereich von 1 bis 5, bevorzugt 2,0 bis 3,5 einzustellen und zu stabilisieren. Als geeignete organische Puffer hierfür kommen bevorzugt Mischungen aus Verbindungen der Komponente c) und deren Salze in Frage. Als bevorzugte Salze kommen insbesondere Alkalisalze, vorzugsweise Natrium- oder Kaliumsalze in Frage.

Die wässrigen Zusammensetzungen können beispielsweise als Lösung oder Suspension vorliegen. Eine Lösung ist bevorzugt.

Bevorzugt enthält die erfindungsgemäße Zusammensetzung
- 5 bis 50 Gew.-%, insbesondere 10 bis 40 Gew.% der Carbamoylsulfonatgruppen-haltigen Verbindung der Komponente a) und
- 0,05 bis 5 Gew.-%, insbesondere 0,1 bis 2 Gew.-% der Komponente b), jeweils bezogen auf die Zusammensetzung.

Ebenfalls bevorzugt enthält die Zusammensetzung zusätzlich 1 bis 20 Gew.-%, insbesondere 1 bis 10 Gew.-%, ganz besonders bevorzugt 1 bis 5% der Komponente c), vorzugsweise Citronensäure, jeweils bezogen auf die Zusammensetzung.

Die Zusammensetzung enthält vorzugsweise herstellungsbedingt 0,01 bis 5 Gew.-%, bevorzugt 0,1 bis 2 Gew.-%, bezogen auf die Zusammensetzung, eines Reaktionsproduktes aus Hydroxy-Polycarbonsäure und dem eingesetzten Polyisocyanat.

Der Trockenrückstand der wässrigen Zusammensetzung, d.h. die Gesamtkonzentration der Inhaltsstoffe der wässrigen Zusammensetzung, beträgt vorzugsweise 25 bis 50%. Insbesondere ist eine Gesamtkonzentration der wässrigen Zusammensetzung von 30 bis 40% vorteilhaft, wobei der Anteil der Komponente a) in der Zusammensetzung besonders vorteilhaft bei 28 bis 35% liegt.

Bei Mitverwendung weiterer Zusatzstoffe ist es bevorzugt, dass sich der Anteil der Komponenten a) bis c) gemäß den Anteilen der weiteren Zusatzkomponente im entsprechenden Verhältnis erniedrigt, so dass die Gesamtkonzentration der Feststoffe in der wässrigen Lösung vorzugsweise nicht mehr als 50% beträgt.

In einer besonderen Ausführungsform enthalten die erfindungsgemässen wässrigen Zubereitungen auch Reaktionsprodukte aus Polyisocyanaten bzw. Polyisocyanat-Bisulfit-Addukten und den partiell veresterten Polyol-Alkoxylaten (Komponente b), wobei diese Reaktionsprodukte Urethangruppen enthalten und über Carbamoylsulfonat-Endgruppen verfügen.

Reaktionsprodukte sind beispielsweise auch durch Reaktion eines Überschusses an Polyisocyanat mit der Komponente b) erhältlich und als Zusatzstoff vorteilhaft einsetzbar.

In einer ebenfalls besonderen Ausführungsform enthalten die erfindungsgemässen wässrigen Zubereitungen auch Reaktionsprodukte aus Polyisocyanaten bzw. Polyisocyanat-Bisulfit-Addukten und Citronensäure. Beispielsweise sind solche Reaktionsprodukte, die Urethangruppen und Carbamoylsulfonatgruppen enthalten, durch Reaktion eines Überschusses an Polyisocyanat mit der Komponente c) und anschliessende Reaktion mit einem Bisulfit und/oder Disulfit erhältlich. Verbindungen dieses Typs sind beispielsweise Bisurethane aus 1 mol Hexamethylendiisocyanat und 2 mol Citronensäure oder beispielsweise das Monourethan aus 1 mol Hexamethylendiisocyanat und 1 Mol Citronensäure, wobei verbleibende NCO-Gruppen in situ mit Bisulfit und/oder Disulfit zur Carbamoylsulfonatgruppe abreagieren.

Besonders bevorzugte Zusammensetzungen sind solche enthaltend Carbamoylsulfonatgruppen-haltigen Verbindungen, die durch Umsetzung von wenigstens einem organischen Isocyanat mit wenigstens einem Bisulfit und/oder Disulfit und wenigstens einer Hydroxy-Polycarbonsäure (Komponente c), insbesondere Citronensäure, vorzugsweise in einer Menge von 0,05 bis 3, bevorzugt 0,1 bis 2 Gew.-%, bezogen auf die Zusammensetzung, in Gegenwart einer Verbindung der Komponente b1) erhalten wurden.

Überraschenderweise zeigen die erfindungsgemäßen Zusammensetzungen eine verbesserte Lagerbeständigkeit und zeigen keine Phasentrennung selbst bei erhöhter Temperatur.

### Herstellung der Zusammensetzung

Die Erfindung betrifft weiterhin ein Verfahren zur Herstellung der erfindungsgemäßen wässrigen Zusammensetzung, das dadurch gekennzeichnet ist, dass man die Komponenten a), b) und c) oder deren Salze ggf. mit weiteren Zusatzstoffen in Wasser mischt.

Die Verbindung der Komponente a) kann auch beispielsweise durch Umsetzung wenigstens eines organischen Polyisocyanats mit wenigstens einem Bisulfit und/oder Disulfit in einem organischen oder wässrig-organischen Lösungsmittel wie beispielsweise Wasser/Dioxan analog der Vorgehensweise aus DE102006056479-A1 erhalten werden.

Die Erfindung betrifft weiterhin ein Verfahren zur Herstellung der erfindungsgemäßen wässrigen Zusammensetzung, das dadurch gekennzeichnet, dass man wenigstens ein organisches Polyisocyanat mit wenigstens einem Bisulfit und/oder Disulfit in Gegenwart von Wasser und der Komponente b) und der Komponente c) oder deren Salze umsetzt und ggf. mit weiteren Zusatzstoffen versetzt.

Besonders bevorzugt ist bei dieser erfindungsgemäßen Verfahrensalternative, dass die Herstellung der Komponente a) durch Umsetzung wenigstens eines organischen Polisocyanats mit wenigstens einem Alkali- oder Ammonium-Bisulfit und/oder Disulfit in Wasser in Gegenwart der Komponente b), insbesondere der Komponente b1) erfolgt.

Ganz besonders bevorzugt ist bei dieser erfindungsgemäßen Verfahrensalternative, dass die Herstellung der Komponente a) durch Umsetzung wenigstens eines organischen Polisocyanats mit wenigstens einem Alkali- oder Ammonium-Bisulfit und/oder Disulfit in Wasser in Gegenwart der Komponente b), insbesondere der Komponente b1) und in Gegenwart der Komponente c) erfolgt.

Dazu sind je nach eingesetztem organischen Polyisocyanat und Reaktionstemperatur im allgemeinen Reaktionszeiten von 1 bis 12, vorzugsweise 1 bis 6 Stunden ausreichend. Die Umsetzung erfolgt vorzugsweise bei einer Temperatur von 0 bis 100°C, bevorzugt bei 10 bis 80°C, besonders bevorzugt bei 10 bis 60°C. Besonders bevorzugt werden Alkali-Bisulfite oder Alkali-Disulfite eingesetzt.

Die Umsetzung der organischen Polyisocyanate mit Alkali- oder Ammonium-Bisulfit und/oder Disulfit erfolgt in Wasser vorzugsweise bei 0 bis 100°C, bevorzugt bei 10 bis 80°C, besonders bevorzugt bei 10 bis 60°C in Gegenwart von wenigstens einer Verbindung der Komponente b1) bis alle NCO-Gruppen reagiert haben.

Dazu sind je nach eingesetztem organischem Polyisocyanat und Reaktionstemperatur im allgemeinen ebenfalls Reaktionszeiten von 1 bis 12, vorzugsweise 1 bis 6 Stunden ausreichend.

Es werden insbesondere 0,05 bis 5, bevorzugt 0,1 bis 2 % der Komponente b), bezogen auf die Zusammensetzung, vor oder während der Zugabe des Polyisocyanats eingesetzt.

Die Umsetzung wird in Gegenwart von Hydroxy-Polycarbonsäuren der Komponente c), insbesondere Citronensäure, Weinsäure oder Milchsäure durchgeführt.

Es werden insbesondere 0,05 bis 3, bevorzugt 0,1 bis 2 % der Komponente c), bezogen auf die Zusammensetzung, bereits während der Reaktion des Polyisocyanats mit dem Bisulfit / Disulfit eingesetzt.

Besonders bevorzugt ist der Zusatz einer Hydroxy-Polycarbonsäure der Komponente c) bereits vor oder während der Synthese der Komponente a). Bevorzugt wird 10% der gesamten Menge der Komponente c) bereits vor oder während der Reaktion des Polyisocyanats mit dem Bisulfit / Disulfit zugesetzt.

Überraschenderweise eignet sich die Verfahrensweise dazu, Carbamoylsulfonate in besonderer Reinheit herzustellen. So enthalten die bevorzugten wässrigen Zusammensetzungen weniger als 2% an Harnstoffgruppen enthaltenden dimeren, trimeren oder polymeren Carbamoylsulfonaten, die durch Hydrolyse der Polyisocyanate bei der Synthese als Nebenprodukte gebildet werden können.

Auch aus verfahrenstechnischer Sicht ist die Mitverwendung einer Hydroxy-Polycarbonsäure, insbesondere Citronensäure, während der Synthese sehr vorteilhaft. Die Geschwindigkeit der exothermen Reaktion mit dem Bisulfit lässt sich auf diesem Weg überraschend einfach beeinflussen und bietet einen zusätzlichen Vorteil und ein erhöhtes Maß an Sicherheit bei der Reaktionsführung.

In einer besonderen Ausführungsform enthalten die erfindungsgemässen wässrigen Zubereitungen auch Reaktionsprodukte aus Polyisocyanaten bzw. Polyisocyanat-Bisulfit-Addukten und Citronensäure. Solche Reaktionsprodukte, die Urethangruppen und ggf. Carbamoylsulfonatgruppen enthalten, sind beispielsweise auch durch Reaktion eines Überschusses an Polyisocyanat mit der Komponente c) erhältlich. Verbindungen dieses Typs sind beispielsweise Bisurethane aus 1 mol Hexamethylendiisocyanat und 2 mol Citronensäure oder beispielsweise das Monourethan aus 1 mol Hexamethylendiisocyanat und 1 Mol Citronensäure, wobei verbleibende NCO-Gruppen mit Bisulfit und/oder Disulfit zur Carbamoylsulfonatgruppe abreagieren.

Die Erfindung betrifft weiterhin Carbamoylsulfonatgruppen-haltige Verbindungen, erhalten durch Umsetzung von wenigstens einem organischen Polyisocyanat mit wenigstens einem Bisulfit und/oder Disulfit und wenigstens einer Hydroxy-Polycarbonsäure oder deren Salze, insbesondere Citronensäure, in Gegenwart eines ein nicht-ionischen, Estergruppen-haltigen, alkoxylierten Polyols mit einem HLB-Wert von wenigstens 13 (b1) und/oder eines Alkylglycosids (b2).

Die Erfindung betrifft ebenfalls ein Verfahren zur Herstellung der noch neuen Carbamoylsulfonatgruppen-haltigen Verbindungen, das dadurch gekennzeichnet, dass man wenigstens ein organisches Polyisocyanat mit wenigstens einem Bisulfit und/oder Disulfit in wässrigem Medium in Gegenwart eines nicht-ionischen, Estergruppen-haltigen, alkoxylierten Polyols mit einem HLB-Wert von wenigstens 13 (b1) und/oder eines Alkylglycosids (b2) und in Gegenwart einer Hydroxy-Polycarbonsäure oder deren Salze, insbesondere Citronensäure umsetzt.

Die Endprodukte sind im allgemeinen optisch klare, wässrige Lösungen, in einigen Einzelfällen auch stabile, feinteilige Emulsionen oder auch Suspensionen mit mittleren Teilchendurchmessern unter 8000 Nanometer, vorzugsweise Dispersionen unter 200 Nanometer. Besonders bevorzugt sind Endprodukte, die als optisch klare wässrige Lösungen bzw. Hydrosole anfallen. Optisch klare

Es werden insbesondere 0,1 bis 50, bevorzugt 0,5 bis 20 Gew.- % an der Verbindung der Komponente b), bezogen auf die Gesamtmenge an eingesetztem Polyisocyanat zur Synthese eingesetzt. Das Emulgiervermögen der Komponenten b) ist bezogen auf die eingesetzten Polyisocyanate unterschiedlich. Generell ist es aber bevorzugt, eine möglichst geringe Menge an Komponente b) einzusetzen. Vorzugsweise wird daher eine Menge 0,1 bis 10 Gew.-% Komponente b) bezogen auf das eingesetzte Polyisocyanat zur Emulgierung des Polyisocyanats eingesetzt.

### Verwendung

Die Erfindung betrifft weiterhin die Verwendung der erfindungsgemäßen Zusammensetzungen als Vorgerbstoffe oder Gerbstoffe von Häuten und Fellen.

Unter Vorgerbstoff wird im Rahmen dieser Erfindung ein Produkt verstanden, mit dem eine Haut oder ein Fell in einen Zustand überführt werden kann, der handelsübliche mechanische Behandlungen wie Abwelken oder Falzen ermöglicht, aber zur Fertigstellung des Leders oder Pelzes weitere Behandlungsschritte mit gerbenden Substanzen benötigt.

Die Erfindung betrifft weiterhin ein Verfahren zum Gerben von Häuten und Fellen, das dadurch gekennzeichnet ist, dass man nach Waschen, Äschern, gegebenenfalls Enthaarung und Entkälkung vorbehandelte Häute oder Felle mit der erfindungsgemäßen Zusammensetzung behandelt.

Für die Gerbung von Fellen entfällt die Enthaarung selbstverständlich.

Die entsprechend vorbereiteten Häute (nachfolgend Blössen genannt) werden vorzugsweise in einem handelsüblichen Gerbfass in wässriger Flotte bei einer Temperatur von 10°C bis 60 °C und einem pH von 5 bis 10, bevorzugt 7 bis 9, mit 0,5 bis 10 %, bevorzugt 1 bis 4 % (bezogen auf den Anteil der reinen Komponente a)) der erfindungsgemäßen Zusammensetzung in der Art behandelt, dass man ein gegerbtes Zwischenprodukt mit einer Schrumpftemperatur von mindestens 65°C, bevorzugt mindestens 68°C, besonders bevorzugt mindestens 70°C erhält. Die Schrumpftemperatur wird nach dem Fachmann bekannten Methoden ermittelt, beispielsweise durch Erwärmen des gegerbten Zwischenproduktes durch Eintauchen in ein Wasserbad, dessen Temperatur mit einer bestimmten Heizrate erhöht wird, bis die Kontraktion des Materials beobachtet wird. Die bei Kontraktion erreichte Temperatur wird am Display des Testgeräts abgelesen (Leather Shrinkage Tester). Die Schrumpftemperatur kann auch mittels der dem Fachmann bekannten Differential Scanning Calorimetry (DSC) - Methode ermittelt werden.

Bevorzugt lässt man nach Zugabe der erfindungsgemäßen Zusammensetzung das Produkt vorzugsweise 0,1 bis 8 h, bevorzugt 0,2 bis 2 h bei einem pH im Schnitt der Blösse von 8 bis 10 und einem Flotten-pH von 7 bis 8 penetrieren und setzt dann ein Fixiermittel hinzu. Als Fixiermittel sind in der Gerberei an sich bekannte Basen oder deren Mischungen geeignet, beispielsweise Natronlauge, Alkalicarbonate, Alkalihydrogencarbonate, Magnesiumoxid, Dolomit, tertiäre Amine etc, besonders aber Dolomit, Magnesiumoxid, Natriumcarbonat und Natronlauge. Die Fixierung erfolgt dabei vorzugsweise über einen Zeitraum von 2 bis 24 h, bevorzugt 4 bis 12 h bei einem Flotten pH von 7 bis 10, bevorzugt einem Flotten-pH von 7,0 bis 8,5.

Es ist auch möglich, die Gerbung durch Ansäuern auf pH 4 bis 6 oder Zusatz von Ammoniak oder einer primären oder sekundären Aminoverbindung zu unterbrechen. Dies ist insbesondere dann vorteilhaft, wenn eine zu starke Adstringenz der Flotte vermieden werden soll und eine teilweise Inaktivierung des Gerbstoffs gewünscht ist. Diese zusätzlichen Massnahmen sind geeignet, um den Gerbprozess in vorteilhafter Weise zu beeinflussen.

Es ist besonders vorteilhaft, einen niedrigen Anfangs-pH der Flotte von 6 bis 7 zur Penetration des Gerbstoffs zu wählen und die Fixierung in einem pH-Bereich zwischen 7,5 und 8,5 und durch Erhöhung der Temperatur zu regulieren.

Die erhaltenen, gegerbten Zwischenprodukte eignen sich für die mechanische Weiterverarbeitung durch z. B. Abwelken, Falzen oder Spalten. Darüber hinaus zeichnen sich diese Zwischenprodukte durch eine ausgesprochen weiße, klare und lichtechte Eigenfarbe aus, was gegenüber mit Glutardialdehyd gegerbten Ledern ein deutlicher Vorteil ist. Sie können mit handelsüblichen Verfahren nachgegerbt und zu weichen und luftigen Crustledern fertig gestellt werden.

Die Erfindung betrifft weiterhin einen Verfahren zur Herstellung von Leder und Pelzen, dadurch gekennzeichnet, dass in wässriger Flotte bei einer Temperatur von 10 °C bis 60 °C und einem pH von 5 bis 10, bevorzugt 7 bis 9 vorbereitetes Blössenmaterial (d.h. für die Gerbung konditionierte Felle oder entkälktes und/oder gebeiztes Blössenmaterial) mit 0,5 bis 10 %, bevorzugt 1 bis 4 % (bezogen auf Wirkstoff der Komponente a)) der erfindungsgemäßen Zusammensetzung solange behandelt, bis man ein gegerbtes Zwischenprodukt mit einer Schrumpftemperatur von mindestens 65°C, bevorzugt mindestens 68°C, besonders bevorzugt mindestens 70°C erhält.

Liegt die Schrumpftemperatur niedriger, ist die mechanische Bearbeitung der gegerbten Zwischenprodukte, des sog. wet white-Materials, auf z.B. Falzmaschinen problematisch, da das wet white Material zu stark an den Messerwalzen klebt und sich schlecht verarbeiten lässt. Lässt man dagegen die Gerbung länger laufen, dosiert mehr Gerbstoff oder führt eine Fixierung bei höheren pH-Werten durch, können wesentlich höhere Schrumpftemperaturen erreicht werden. Diese sind aber für die mechanische Bearbeitung der Blössen nicht erforderlich.

In einer gesonderten Ausführung der Erfindung können die Eigenschaften zur mechanischen Weiterverarbeitung sowie die endgültigen Ledereigenschaften den Anforderungen der Kunden angepasst werden, indem vor, während oder nach der Zugabe der erfindungsgemäßen Zusammensetzung weitere in der Gerberei typische Stoffe der Gerbflotte zugegeben werden.

Dazu gehören dem Fachmann an sich bekannte, handelsübliche synthetische organische Gerbstoffe, Harzgerbstoffe, füllende und weichmachende Polymergerbstoffe, Fettungsmittel und Hydrophobiermittel. Vorzugsweise wenden diese Mittel in den nachfolgenden Nachgerbschritten in den für wet white üblichen Mengen eingesetzt.

Vorteil des erfindungsgemäßen Gerbprozesses ist, dass Leder mit einem breiten Spektrum an Eigenschaften erhalten werden können und die bei der mechanischen Bearbeitung anfallenden Falzspäne vielseitig als Rohstoffe verwendet werden können, u.a. auch zur Herstellung von wertvollen Produkten, die im Lederherstellungsprozess eingesetzt werden können. Dadurch wird ein wesentlicher Beitrag geliefert, die Abfälle bei der Lederherstellung weiter zu vermindern.

### Beispiele

### Vergleichsbeispiel 1 (EP-A 0 690 135, Beispiel 5) (10,7 % Emulgator bezogen auf HDI)

Unter Stickstoff werden 15,75 g (0,007 Mol) eines auf n-Butanol gestarteten Ethylenoxid-Propylenoxid-Polyethers mit einem Molekulargewicht von 2250 g/mol und einem Ethylenoxidgruppen-Gehalt von 85%, der im Vakuum bei 110°C entwässert wurde, bei Raumtemperatur unter Stickstoff mit 147,3 g (0,877 Mol) Hexamethylendiisocyanat vermischt und auf 100 °C erwärmt. Die Temperatur wird 3 Stunden gehalten und anschließend der NCO-Gehalt bestimmt (berechnet 45,0%, gefunden 44,7%).

Nach Abkühlen auf Raumtemperatur wurden 507,2 g (1,900 Mol) einer 39%igen Natriumbisulfit-Lösung in Wasser zugegeben und 0,5 Stunden nachgerührt, wobei die Temperatur auf ca. 45°C anstieg. Nun wurden 231,9 g entsalztes Wasser zugegeben, um den Feststoffgehalt auf 40% einzustellen. Die Mischung wird 16 Stunden bei Raumtemperatur nachgerührt. Eine geringe Menge eines weißen Feststoffs wird abfiltriert und man erhält eine klare, farblose 40%ige Lösung mit pH 4,8.

Lagerung bei 40°C / 4 Wochen: Niederschlag, pH 7,10.
Wirksamkeit nach thermischer Behandlung: ca. 30%

### Vergleichsbeispiel 2 (EP 1647563, Beispiel A24): (15% Emulgator bezogen aufHDI)

Zu einer Lösung aus 150 g eines verzweigten C₁₃-Alkohol-Ethoxylats mit 10 mol EO in 5100 g Natriumbisulfitlösung (26,5 %) werden innerhalb von 30 Minuten bei Raumtemperatur unter Rühren 1000 g Hexamethylendiisocyanat zudosiert, wobei sich die Reaktionsmischung auf ca. 45 °C erwärmt. Es wird 6 Stunden auf 20°C nachgerührt. Dann werden 37,5 g Citronensäure Monohydrat zugegeben und die leicht trübe Lösung abschließend filtriert. Man erhält eine klare, 40 %ige Lösung mit pH 3,6.

Lagerung bei 40°C / 4 Wochen: Niederschlag, es bilden sich 2 flüssige Phasen, beim Schütteln starke Schaumbildung, pH 6,75.

Lagerung bei 20°C / 4 Wochen: klare homogene Lösung, pH 4,30

Wirksamkeit nach thermischer Behandlung: ca. 50%

### A) Herstellung erfindungsgemäßer Zusammensetzungen

### Beispiel A1: (7,1% Komp. b) bezogen auf HDI)

Zu einer Lösung aus 21 g Sorbitan-polyethylenglycol (20) monododecanoat (z.B. Eumulgin® SML 20 (Cognis) oder Tween® 20 (Croda), das mit insgesamt 20 Ethylenoxid-Einheiten pro Sorbitan-Einheit alkoxylierte ist (HALB 16,7), in 1334 g Wasser und 351,6 g Natrium-Metabisulfit (Na₂S₂O₅) werden bei 23°C 296,4 g Hexamethylendiisocyanat unter Rühren in einer Portion zugegeben. Dann wird die Temperatur der Reaktionsmischung innerhalb von 30 Minuten auf 50°C erhöht. Zu diesem Zeitpunkt hat die Mischung einen pH-Wert von 5,53 erreicht.

Es wird noch 1 Stunde bei 50°C nachgerührt, wobei der pH-Wert in den ersten 30 Minuten noch bis 6,51 ansteigt und dann konstant bleibt. Das Reaktionsgemisch ist fast klar und wird innerhalb von 2 Stunden auf 20°C abgekühlt. Es wird noch 2 Stunden bei Raumtemperatur (20-23°C) nachgerührt. Der pH-Wert der Lösung beträgt 6,39.

Der Ansatz wird nun geteilt:
1) 961,4 g Produkt werden mit 8,1 g Citronensäure Monohydrat (0,8 %) versetzt.
   Nach Filtration erhält man eine klare Lösung mit 34,8% Festgehalt und pH 3,60.
   Lagerung bei 40°C / 4 Wochen: nicht mehr ganz klare Lösung, pH 6,42
   Lagerung bei 20°C / 4 Wochen: klare homogene Lösung, pH 3,80
   Wirksamkeit nach thermischer Behandlung bei 40°C / 4 Wochen: 80%
2) 1024,9 g Produkt werden mit 25,4 g Citronensäure Monohydrat (2,4%) versetzt.
   Nach Filtration erhält man eine klare Lösung mit 36,1% Festgehalt und pH 2,96.
   Lagerung bei 40°C / 4 Wochen: klare homogene Lösung, pH 3,31
   (klare Lösung, keine CO₂-Entwicklung)
   Lagerung bei 20°C / 4 Wochen: klare homogene Lösung, pH 3,00
   Wirksamkeit nach thermischer Behandlung bei 40°C / 4 Wochen: 100%

### Beispiel A2: (7,1% Komp. b) bezogen auf HDI)

In einer Lösung aus 2668 g Wasser und 703,2 g Natrium-Metabisulfit (Na₂S₂O_{S}) wurden 42,0 g Sorbitan-polyethylenglycol (20)-monododecanoat (z.B. Eumulgin® SML 20 (Cognis) oder Tween® 20 (Croda)), das mit insgesamt 20 Ethylenoxid-Einheiten pro Sorbitan-Einheit alkoxyliert ist (HLB 16,7), gelöst. Bei 22°C wurden 592,8 g Hexamethylendiisocyanat unter Rühren in einer Portion zugegeben. Dann wird die Temperatur der Reaktionsmischung innerhalb von 40 Minuten auf 50°C erhöht. Zu diesem Zeitpunkt hat die Mischung einen pH-Wert von 5,72 erreicht.

Es werden 33,6 g Citronensäure Monohydrat gelöst in 100 g Wasser zugegeben, wobei ein pH-Wert von 3,72 resultiert.

Es wird noch 1 Stunde bei 50°C nachgerührt, wobei der pH-Wert in den ersten 30 Minuten noch bis 4,66 ansteigt und dann konstant bleibt. Das Reaktionsgemisch ist bereits klar und wird innerhalb von 2 Stunden auf 20°C abgekühlt. Es wird noch 2 Stunden bei Raumtemperatur (20-23°C) nachgerührt. Der pH-Wert der Lösung beträgt 4,67. Es werden 100,8 g Citronensäure Monohydrat in fester Form zugegeben und die Konzentration mit Wasser eingestellt.

Man erhält eine klare 35 %ige Lösung mit pH 3,11.

Lagerung bei 40°C / 4 Wochen: klare homogene Lösung, pH 3,70

Lagerung bei 20°C / 4 Wochen: klare homogene Lösung, pH 3,00.

Wirksamkeit nach thermischer Behandlung bei 40°C / 4 Wochen: 100%

### Beispiel A3: (6,1% Komp. b) bezogen auf IPDI)

Zu einer Lösung aus 15,7 g Sorbitan-polyethylenglycol (20)-monododecanoat (z.B. Eumulgin® SML 20 (Cognis) oder Tween® 20 (Croda)), das mit insgesamt 20 Ethylenoxid-Einheiten pro Sorbitan-Einheit alkoxyliert ist (HLB 16,7), in 573,1 g Wasser und 646,4 g Natriumbisulfitlösung (NaHSO₃, 38-40% in Wasser) werden bei 20°C 256,4 g Isophorondiisocyanat unter Rühren in 5 Minuten zugegeben. Dann wird die Temperatur der Reaktionsmischung innerhalb von 90 Minuten auf 50°C erhöht. Zu diesem Zeitpunkt hat die Mischung einen pH-Wert von 5,90 erreicht.

Es wird noch 1,5 Stunden bei 50°C nachgerührt, wobei das Reaktionsgemisch nach 45 Minuten klar wird. Dann wird innerhalb von 1,5 Stunden auf 23°C abgekühlt. Es wird noch 4 Stunden bei Raumtemperatur (20-23°C) nachgerührt. Der pH-Wert der Lösung beträgt 5,65. Es werden 20,4 g Citronensäure Monohydrat gelöst in 20,4 g Wasser zugegeben und die Konzentration mit 18,7 g Wasser eingestellt. Man erhält eine klare 35 %ige Lösung mit pH 2,80.

Lagerung bei 40°C / 4 Wochen: klare homogene Lösung, pH 2,95.

Lagerung bei 20°C / 4 Wochen: klare homogene Lösung, pH 2,80.

Wirksamkeit nach thermischer Behandlung bei 40°C / 4 Wochen: 100%

### Beispiel A4: (7,1% Komp. b) bezogen auf HDI)

Zu einer Lösung aus 97,9 g Sorbitan-polyethylenglycol (20)-monododecanoat (z.B. Eumulgin SML 20 (Cognis) oder Tween 20 (Croda)), das mit insgesamt 20 Ethylenoxid-Einheiten pro Sorbitan-Einheit alkoxyliert ist (HLB 16,7), in 3265,3 g Wasser und 4617,2 g Natriumbisulfitlösung (NaHSO₃, 38-40% in Wasser) werden bei 20°C 1385,6 g Hexamethylendiisocyanat unter Rühren in 5 Minuten zugegeben. Dann wird die Temperatur der Reaktionsmischung innerhalb von 30 Minuten auf 50°C erhöht. Dann werden 78,1 g Citronensäure Monohydrat gelöst in 64,7 g Wasser zugegeben.

Es wird noch 1 Stunde bei 50°C nachgerührt, wobei das Reaktionsgemisch klar wird. Dann wird innerhalb von 2 Stunden auf 23°C abgekühlt. Es wird noch 1 Stunde bei Raumtemperatur (20-23°C) nachgerührt. Der pH-Wert der Lösung beträgt 3,84. Dann werden 235,7 g Citronensäure Monohydrat gelöst in 195,2 g Wasser zugegeben und die Konzentration durch Zugabe von 264,2 g Wasser eingestellt. Man erhält eine klare 35,2 %ige Lösung mit pH 2,68.

Lagerung bei 40°C / 4 Wochen: klare homogene Lösung, pH 3,33.

Lagerung bei 20°C / 4 Wochen: klare homogene Lösung, pH 2,70.

Wirksamkeit nach thermischer Behandlung bei 40°C / 4 Wochen: 100%

### Beispiel A5: (7,1% Komp. b) bezogen auf HDI)

Zu einer Lösung aus 10,5 g Sorbitan-polyethylenglycol (20)-monododecanoat (z.B. Eumulgin SML 20 (Cognis) oder Tween 20 (Croda)), das mit insgesamt 20 Ethylenoxid-Einheiten pro Sorbitan-Einheit alkoxyliert ist (HLB 16,7), in 550,0 g Wasser und 184,2 g Natrium-Metabisulfit (Na₂S₂O₅) werden 1,2 g Citronensäure-Monohydrat gegeben. Dann werden bei 23°C 148,2 g Hexamethylendiisocyanat unter Rühren in einer Portion zugegeben. Sofort anschliessend wird eine Lösung aus 58,3 g Citronensäure Monohydrat gelöst in 99,2 g Wasser zudosiert, wobei ein pH-Wert von zwischen 3,0 und 4,0 gehalten wird. Direkt nach Zugabe des Isocyanats wird gleichzeitig die Temperatur der Reaktionsmischung innerhalb von 50 Minuten auf 50°C erhöht. Es wird 1 Stunde bei 50°C nachgerührt. Das Reaktionsgemisch wird klar und hat einen pH-Wert von 3,55. Abschliessend werden 169,0 g Wasser zugegeben. Man erhält eine klare 33,7 %ige Lösung mit pH-Wert 3,24.

Lagerung bei 40°C / 4 Wochen: klare homogene Lösung, pH 3,40.

Lagerung bei 20°C / 4 Wochen: klare homogene Lösung, pH 3,20.

Wirksamkeit nach thermischer Behandlung bei 40°C / 4 Wochen: ca. 90 %

### Beispiel A6: (7,14% Komp. b) bezogen auf HDI)

Zu einer Lösung aus 9,9 g Sorbitan-polyethylenglycol (20)-monooleat (z.B. Tween 80, Croda), das mit insgesamt 20 Ethylenoxid-Einheiten pro Sorbitan-Einheit alkoxylierte (HALB 15,0) ist, in 326,5 g Wasser und 461,7 g Natriumbisulfit-Lösung (NaHSO₃, 38-40% in Wasser) werden bei 24°C 138,6 g Hexamethylendiisocyanat unter Rühren in einer Portion zugegeben. Dann wird die Temperatur der Reaktionsmischung innerhalb von 30 Minuten auf 50°C erhöht. Zu diesem Zeitpunkt hat die Mischung einen pH-Wert von 5,23 erreicht.

Es werden 7,8 g Citronensäure Monohydrat, gelöst in 7,8 g Wasser, zugegeben, wobei ein pH-Wert von 3,45 resultiert. Es wird noch 1 Stunde bei 50°C nachgerührt, wobei der pH-Wert in den ersten 30 Minuten noch bis 4,28 ansteigt und dann konstant bleibt. Das Reaktionsgemisch ist klar und wird innerhalb von 2 Stunden auf 20°C abgekühlt. Es wird noch 2 Stunden bei Raumtemperatur (20-23°C) nachgerührt. Der pH-Wert der Lösung beträgt 4,14. Es werden 23,6 g Citronensäure Monohydrat, gelöst in 23,6 g Wasser, zugegeben und die Konzentration mit 20,0 g Wasser eingestellt. Man erhält eine klare 35 %ige Lösung mit pH 3,05.

Lagerung bei 40°C / 4 Wochen: klare homogene Lösung, pH 3,59

Lagerung bei 20°C / 4 Wochen: klare homogene Lösung, pH 2,82.

Wirksamkeit nach thermischer Behandlung bei 40°C / 4 Wochen: 100%

### Beispiel A7: (7,14% Komp. b) bezogen auf HDI)

Zu einer Lösung aus 9,9 g Sorbitan-polyethylenglycol (20)-monohexadecanoat (z.B. Tween 40, Croda), das mit insgesamt 20 Ethylenoxid-Einheiten pro Sorbitan-Einheit alkoxylierte ist (HLB 15,6), in 326,5 g Wasser und 461,7 g Natriumbisulfit-Lösung (NaHSO₃, 38-40% in Wasser) werden bei 21°C 138,6 g Hexamethylendiisocyanat unter Rühren in einer Portion zugegeben. Dann wird die Temperatur der Reaktionsmischung innerhalb von 40 Minuten auf 50°C erhöht. Zu diesem Zeitpunkt hat die Mischung einen pH-Wert von 5,51 erreicht.

Es werden 7,8g Citronensäure Monohydrat, gelöst in 7,8 g Wasser zugegeben, wobei ein pH-Wert von 3,56 resultiert.

Es wird noch 1 Stunde bei 50°C nachgerührt, wobei der pH-Wert in den ersten 30 Minuten noch bis 4,35 ansteigt und dann konstant bleibt. Das Reaktionsgemisch ist bereits klar und wird innerhalb von 2 Stunden auf 20°C abgekühlt. Es wird noch 2 Stunden bei Raumtemperatur (20-23°C) nachgerührt. Der pH-Wert der Lösung beträgt 4,25. Es werden 23,6 g Citronensäure Monohydrat gelöst in 23,6 g Wasser zugegeben und die Konzentration mit 20,0 g Wasser eingestellt. Man erhält eine klare 34,9 %ige Lösung mit pH 2,58.

Lagerung bei 40°C / 4 Wochen: klare homogene Lösung, pH 3,56

Lagerung bei 20°C / 4 Wochen: klare homogene Lösung, pH 2,71.

Wirksamkeit nach thermischer Behandlung bei 40°C / 4 Wochen: 100%

### Beispiel A8: (6,18 % Komp. b) bezogen auf CHMDI)

Zu einer Lösung aus 9,9 g Sorbitan-polyethylenglycol (20)-monododecanoat (z.B. Eumulgin SML 20 (Cognis) oder Tween 20 (Croda)), das mit insgesamt 20 Ethylenoxid-Einheiten pro Sorbitan-Einheit alkoxyliert ist (HLB 16,7), in 326,5 g Wasser und 461,7 g Natriumbisulfit-Lösung (NaHSO₃, 38-40% in Wasser) werden bei 20°C 160,1 g 1,3-Bis (isocyanatomethyl) cyclohexan (Aldrich) unter Rühren hinzugefügt. Dann wird die Temperatur der Reaktionsmischung innerhalb von 30 Minuten auf 50°C erhöht. Zu diesem Zeitpunkt hat die Mischung einen pH-Wert von 3,97 erreicht.

Es werden 7,8 g Citronensäure Monohydrat gelöst in 7,8 g Wasser zugegeben, wobei ein pH-Wert von 3,23 resultiert. Es wird noch 1,75 Stunden bei 50°C nachgerührt, wobei der pH-Wert in den ersten 60 Minuten noch bis 4,29 ansteigt und dann konstant bleibt. Das Reaktionsgemisch ist dann klar und wird innerhalb von 2 Stunden auf 20°C abgekühlt. Es wird noch 2 Stunden bei Raumtemperatur (20-23°C) nachgerührt. Der pH-Wert der Lösung beträgt 4,07. Es werden 23,6 g Citronensäure Monohydrat gelöst in 23,6 g Wasser zugegeben und die Konzentration mit 61,2 g Wasser eingestellt. Man erhält eine klare 35,0 %ige Lösung mit pH 2,60.

Lagerung bei 40°C / 4 Wochen: klare, homogene Lösung, pH 2,90.

Lagerung bei 20°C / 4 Wochen ; klare, homogene Lösung, pH 2,65

Wirksamkeit nach thermischer Behandlung bei 40°C / 4 Wochen: 100%

### Beispiel A9: (7,07 % Komp. b) bezogen auf HDI)

Zu einer Lösung aus 9,8 g Sorbitan-polyethylenglycol (20)-monooctadecanoat (z.B. Eumulgin SMS 20 (Cognis) oder Tween 60 (Croda)), das mit insgesamt 20 Ethylenoxid-Einheiten pro Sorbitan-Einheit alkoxyliert ist (HLB 14,9), in 326,5 g Wasser und 461,7 g Natriumbisulfit-Lösung (NaHSO₃, 38-40% in Wasser) werden bei 24°C 138,6 g Hexamethylendiisocyanat unter Rühren hinzugefügt. Dann wird die Temperatur der Reaktionsmischung innerhalb von 28 Minuten auf 50°C erhöht. Zu diesem Zeitpunkt hat die Mischung einen pH-Wert von 5,28 erreicht.

Es werden 7,8 g Citronensäure Monohydrat gelöst in 6,5 g Wasser zugegeben, wobei ein pH-Wert von 3,11 resultiert. Es wird noch 1 Stunde bei 50°C nachgerührt, wobei der pH-Wert in den ersten 30 Minuten noch bis 3,22 ansteigt und dann konstant bleibt. Das Reaktionsgemisch ist fast klar und wird innerhalb von 2 Stunden auf 20°C abgekühlt. Es wird noch 2 Stunden bei Raumtemperatur (20-23°C) nachgerührt. Der pH-Wert der Lösung beträgt 2,80. Es werden 23,6 g Citronensäure Monohydrat gelöst in 23,6 g Wasser zugegeben und die Konzentration mit 20,0 g Wasser eingestellt. Man erhält eine leicht trübe 34,9 %ige Lösung mit pH 2,38.

Lagerung bei 40°C / 4 Wochen: klare homogene Lösung, pH 3,10.

Lagerung bei 20°C / 4 Wochen: leicht trübe, homogene Lösung, pH 2,50

Wirksamkeit nach thermischer Behandlung bei 40°C / 4 Wochen: 100%

### Beispiel A10: (7,12 % Komp. b) bezogen auf HDI)

Zu einer Lösung aus 15,8 g C8-C10 Alkylglucosid (DP 1,6) (62,5 % in Wasser) (z.B. Glucopon 215 UP, Cognis), in 320 g Wasser und 461,7 g Natriumbisulfit-Lösung (NaHSO₃, 38-40% in Wasser) werden bei 22°C 138,6 g Hexamethylendiisocyanat unter Rühren in einer Portion zugegeben. Dann wird die Temperatur der Reaktionsmischung innerhalb von 45 Minuten auf 50°C erhöht. Zu diesem Zeitpunkt hat die Mischung einen pH-Wert von 5,27 erreicht.

Es werden 7,8 g Citronensäure Monohydrat, gelöst in 7,8 g Wasser zugegeben, wobei ein pH-Wert von 3,86 resultiert.

Es wird noch 1 Stunde bei 50°C nachgerührt, wobei der pH-Wert bis 4,95 ansteigt. Das Reaktionsgemisch ist bereits klar und wird innerhalb von 2 Stunden auf 20°C abgekühlt. Es wird noch 2 Stunden bei Raumtemperatur (20-23°C) nachgerührt. Der pH-Wert der Lösung beträgt 4,84. Es werden 45,8 g Citronensäure Monohydrat gelöst in 45,8 g Wasser zugegeben und die Konzentration mit 21,8 g Wasser eingestellt. Man erhält eine klare 35,6 %ige Lösung mit pH 2,80.

Lagerung bei 40°C / 4 Wochen: klare homogene Lösung, pH 3,14

Lagerung bei 20°C / 4 Wochen: klare homogene Lösung, pH 2,70.

Wirksamkeit nach thermischer Behandlung bei 40°C / 4 Wochen: 100%

### Beispiel A11: (7,14 % Komp. b) bezogen auf HDI)

Zu einer Lösung aus 19,4 g C12-C16 Alkylglucosid (DP 1,4) (51% in Wasser) (z.B. Glucopon 600 CS UP, Cognis), in 317 g Wasser und 461,7 g Natriumbisulfit-Lösung (NaHSO₃, 38-40% in Wasser) werden bei 22°C 138,6 g Hexamethylendiisocyanat unter Rühren in einer Portion zugegeben. Dann wird die Temperatur der Reaktionsmischung innerhalb von 55 Minuten auf 50°C erhöht. Zu diesem Zeitpunkt hat die Mischung einen pH-Wert von 5,04 erreicht.

Es werden 7,8 g Citronensäure Monohydrat, gelöst in 7,8 g Wasser zugegeben, wobei ein pH-Wert von 3,87 resultiert.

Es wird noch 1 Stunde bei 50°C nachgerührt, wobei der pH-Wert bis 5,04 ansteigt. Das Reaktionsgemisch ist fast klar und wird innerhalb von 2 Stunden auf 20°C abgekühlt. Es wird noch 2 Stunden bei Raumtemperatur (20-23°C) nachgerührt. Der pH-Wert der Lösung beträgt 5,01. Es werden 30,4 g Citronensäure Monohydrat gelöst in 23,6 g Wasser zugegeben und die Konzentration mit 6,8 g Wasser eingestellt. Man erhält eine transparente, fast klare 35,4 %ige Lösung mit pH 3,07.

Lagerung bei 40°C / 4 Wochen: 2 Phasen, die nach Abkühlen auf 20°C mischbar sind, pH 3,58

Lagerung bei 20°C / 4 Wochen: fast klare homogene Lösung, pH 2,99.

Wirksamkeit nach thermischer Behandlung bei 40°C / 4 Wochen: 100%

### Beispiel A12: (7,14% Komp. b) bezogen auf HDI)

Zu einer Lösung aus 9,9 g hydriertes Ricinusöl-Ethoxylat (z.B. Eumulgin HRE 40, Cognis), das mit insgesamt 40 Ethylenoxid-Einheiten alkoxyliert ist (HLB 14,0), in 326,5 g Wasser und 461,7 g Natriumbisulfit-Lösung (NaHSO₃, 38-40% in Wasser) werden bei 20°C 138,6 g Hexamethylendiisocyanat unter Rühren in einer Portion zugegeben. Dann wird die Temperatur der Reaktionsmischung innerhalb von 45 Minuten auf 50°C erhöht. Zu diesem Zeitpunkt hat die Mischung einen pH-Wert von 6,01 erreicht.

Es werden 7,8 g Citronensäure Monohydrat, gelöst in 7,8 g Wasser zugegeben, wobei ein pH-Wert von 3,80 resultiert.

Es wird noch 1 Stunde bei 50°C nachgerührt, wobei der pH-Wert bis 4,30 ansteigt. Das Reaktionsgemisch ist klar und wird innerhalb von 2 Stunden auf 20°C abgekühlt. Es wird noch 2 Stunden bei Raumtemperatur (20-23°C) nachgerührt. Der pH-Wert der Lösung beträgt 4,18. Es werden 23,6 g Citronensäure Monohydrat gelöst in 23,6 g Wasser zugegeben und die Konzentration mit 15,0 g Wasser eingestellt. Man erhält eine klare 35,0 %ige Lösung mit pH 3,02.

Lagerung bei 40°C / 4 Wochen: klare homogene Lösung, pH 3,55

Lagerung bei 20°C / 4 Wochen: leicht trübe klare homogene Lösung, pH 2,91.

Wirksamkeit nach thermischer Behandlung bei 40°C / 4 Wochen: 100%

### Beispiel A13: (7,1 % Komp. b) bezogen auf HDI)

Zu einer Lösung aus 9,9 g Polyoxyethylen (20)-glycerin monostearat (z.B. Cutina® E24, Cognis), das mit insgesamt 20 Ethylenoxid-Einheiten pro Glycerin-Einheit alkoxyliert ist (HLB 13,5), in 326,5 g Wasser und 461,7 g Natriumbisulfit-Lösung (NaHSO₃, 38-40% in Wasser) werden bei 22°C 138,6 g Hexamethylendiisocyanat unter Rühren in einer Portion zugegeben. Dann wird die Temperatur der Reaktionsmischung innerhalb von 40 Minuten auf 50°C erhöht. Zu diesem Zeitpunkt hat die Mischung einen pH-Wert von 5,67 erreicht.

Es werden 7,8 g Citronensäure Monohydrat, gelöst in 7,8 g Wasser zugegeben, wobei ein pH-Wert von 3,80 resultiert.

Es wird noch 1 Stunde bei 50°C nachgerührt, wobei der pH-Wert bis 4,79 ansteigt. Das Reaktionsgemisch ist klar und wird innerhalb von 2 Stunden auf 20°C abgekühlt. Es wird noch 2 Stunden bei Raumtemperatur (20-23°C) nachgerührt. Der pH-Wert der Lösung beträgt 4,69. Es werden 33,6 g Citronensäure Monohydrat gelöst in 33,6 g Wasser zugegeben und die Konzentration mit 15,0 g Wasser eingestellt. Man erhält eine transparente, fast klare 35,2 %ige Lösung mit pH 2,82.

Lagerung bei 40°C / 4 Wochen: klare homogene Lösung, pH 3,30

Lagerung bei 20°C / 4 Wochen: transparente, fast klare Lösung, pH 2,86.

Wirksamkeit nach thermischer Behandlung bei 40°C / 4 Wochen: 100%

### Beispiel A14: (7,1 % Komp. b) bezogen auf HDI)

Zu einer Lösung aus 9,8 g Sorbitan-polyethylenglycol (30)-monododecanoat, das mit insgesamt 30 Ethylenoxid-Einheiten pro Sorbitan-Einheit alkoxyliert ist (HLB 17,6), in 326,5 g Wasser und 461,7 g Natriumbisulfitlösung (NaHSO₃, 38-40% in Wasser) werden bei 20°C 138,6 g Hexamethylendiisocyanat unter Rühren in 5 Minuten zugegeben. Dann wird die Temperatur der Reaktionsmischung innerhalb von 30 Minuten auf 50°C erhöht. Dann werden 7,8 g Citronensäure Monohydrat gelöst in 6,5 g Wasser zugegeben.

Es wird noch 1 Stunde bei 50°C nachgerührt, wobei das Reaktionsgemisch klar wird. Dann wird innerhalb von 2 Stunden auf 23°C abgekühlt. Es wird noch 1 Stunde bei Raumtemperatur (20-23°C) nachgerührt. Der pH-Wert der Lösung beträgt 3,91. Dann werden 23,6 g Citronensäure Monohydrat gelöst in 19,5 g Wasser zugegeben und die Konzentration durch Zugabe von 26,4 g Wasser eingestellt. Man erhält eine klare 35,2 %ige Lösung mit pH 2,75.

Lagerung bei 40°C / 4 Wochen: klare homogene Lösung, pH 3,50.

Lagerung bei 20°C / 4 Wochen: klare homogene Lösung, pH 2,90.

Wirksamkeit nach thermischer Behandlung bei 40°C / 4 Wochen: 100%

### Beispiel A15: (7,1% Komp. b) bezogen auf HDI)

Zu einer Lösung aus 9,8 g Sorbitan-polyethylenglycol (15)-monododecanoat, das mit insgesamt 15 Ethylenoxid-Einheiten pro Sorbitan-Einheit alkoxyliert ist (HLB 16,0), in 326,5 g Wasser und 461,7 g Natriumbisulfitlösung (NaHSO₃, 38-40% in Wasser) werden bei 20°C 138,6 g Hexamethylendiisocyanat unter Rühren in 5 Minuten zugegeben. Dann wird die Temperatur der Reaktionsmischung innerhalb von 30 Minuten auf 50°C erhöht. Dann werden 7,8 g Citronensäure Monohydrat gelöst in 6,5 g Wasser zugegeben.

Es wird noch 1 Stunde bei 50°C nachgerührt, wobei das Reaktionsgemisch klar wird. Dann wird innerhalb von 2 Stunden auf 23°C abgekühlt. Es wird noch 1 Stunde bei Raumtemperatur (20-23°C) nachgerührt. Der pH-Wert der Lösung beträgt 3,85. Dann werden 23,6 g Citronensäure Monohydrat gelöst in 19,5 g Wasser zugegeben und die Konzentration durch Zugabe von 26,4 g Wasser eingestellt. Man erhält eine klare 35,2 %ige Lösung mit pH 2,80.

Lagerung bei 40°C / 4 Wochen: klare homogene Lösung, pH 3,35.

Lagerung bei 20°C / 4 Wochen: klare homogene Lösung, pH 2,70.

Wirksamkeit nach thermischer Behandlung bei 40°C / 4 Wochen: 100%

### Beispiel A16: (7,1%Komp. b) bezogen aufHDI)

In einer Lösung aus 1334,0 g Wasser und 351,6 g Natrium-Metabisulfit (Na₂S₂O₅) wurden 21,0 g Sorbitan-polyethylenglycol (20)-monododecanoat (z.B. Eumulgin SML 20 (Cognis) oder Tween 20 (Croda)), das mit insgesamt 20 Ethylenoxid-Einheiten pro Sorbitan-Einheit alkoxyliert ist (HLB 16,7), gelöst. Bei 40°C wurden 296,4 g Hexamethylendiisocyanat unter Rühren in einer Portion zugegeben. Nach 10 Minuten sind 50°C erreicht. Zu diesem Zeitpunkt hat die Mischung einen pH-Wert von 4,89 erreicht. Es wird noch 1 Stunde bei 50°C nachgerührt, wobei der pH-Wert innerhalb von 20 Minuten noch bis 6,30 ansteigt und dann konstant bleibt. Das Reaktionsgemisch ist leicht trüb und wird innerhalb von 2 Stunden auf 20°C abgekühlt. Es wird noch 2 Stunden bei Raumtemperatur (20-23°C) nachgerührt. Der pH-Wert der Lösung beträgt 6,12. Es werden 48,1 g Citronensäure Monohydrat in fester Form zugegeben und die Konzentration mit Wasser eingestellt. Nach Filtration erhält man eine klare 35 %ige Lösung mit pH 2,95.

Lagerung bei 40°C / 4 Wochen: klare homogene Lösung, pH 3,85

Lagerung bei 20°C / 4 Wochen: klare homogene Lösung, pH 3,15.

Wirksamkeit nach thermischer Behandlung bei 40°C / 4 Wochen: 90%

### Beispiel A17: (17,4% Komp. b) bezogen auf HDI)

In einer Lösung aus 3700,0 g Wasser und 1013,1 g Natrium-Metabisulfit (Na₂S₂O₅) wurden 142,0 g Sorbitan-polyethylenglycol (20)-monododecanoat (z.B. Eumulgin SML 20 (Cognis) oder Tween 20 (Croda)), das mit insgesamt 20 Ethylenoxid-Einheiten pro Sorbitan-Einheit alkoxyliert ist (HLB 16,7), gelöst. Beginnend bei 22°C wurden innerhalb von 2 Stunden 815,3 g Hexamethylendiisocyanat unter Rühren zudosiert. Nach weiteren 30 Minuten hat die Mischung einen pH-Wert von 5,77 und 32°C erreicht. Dann wird noch 5,5 Stunden unter leichter Kühlung bei einer Temperatur bei 20 bis 30°C nachgerührt, wobei der pH-Wert auf 5,68 fällt. Das Reaktionsgemisch ist trüb und wird über Nacht stehen gelassen. Zu der noch schwach trüben Lösung werden 46,2 g Citronensäure Monohydrat und 300 g Wasser zugegeben. Nach Filtration erhält man eine klare 34,5 %ige Lösung mit pH 3,35.

Lagerung bei 40°C / 4 Wochen: klare homogene Lösung, pH 4,25

Lagerung bei 20°C / 4 Wochen: klare homogene Lösung, pH 3,45.

Wirksamkeit nach thermischer Behandlung bei 40°C / 4 Wochen: 90%

### B) Verwendungsbeispiele (Gerbungen)

Die Einsatzmengen der jeweils eingesetzten Produkte (z.B. Handelsprodukte in der Lieferform) beziehen sich auf das Gewicht der eingesetzten Rohware bzw. der Zwischenprodukte.

### B1: medizinisches Schafsfell, chromfrei

In einer betriebsüblichen Haspel werden luftgetrocknete Schafsfelle mit 20 l Wasser pro Fell und 2,0 g/l eines nichtionischen Emulgators auf Basis eines Fettalkohol-ethoxylats bei 25 °C über Nacht rückgeweicht und anschließend entfleischt. Die so vorbereiteten Felle werden bei 35 °C zweimal in wässriger Flotte mit 2,0 g/l eines nichtionischen Emulgators auf Basis eines Fettalkohol-ethoxylats für jeweils 60 min. entfettet und nach Ablassen der Flotte mit warmem Wasser gründlich gespült.

Zur Vorbereitung der Gerbung wird neue Flotte vorgelegt und ohne Pickel bei 25 °C mit 14 - 16 g/l erfindungsgemäßem Produkt aus Beispiel A 2 versetzt. Durch Zugabe von Magnesiumoxid in drei Dosen wird der pH schrittweise auf 8,8 erhöht und dann die Temperatur auf 40 °C angehoben.

Nach 12 h Laufzeit werden ins gleiche Bad 7 g/l sulfatiertes synthetisches Fettungsmittel und 2,0g/l Lecithin-basiertes Dispergierhilfsmittel gegeben. Nach 2 h wird mit Ameisensäure der pH auf 5,5 reduziert. Nach Ablassen der Flotte wird mit kaltem Wasser gründlich nachgewaschen und die Felle handelsüblich fertig gestellt und weisen eine Schrumpftemperatur von 77 °C auf.

Gegenüber handelsüblich mit Glutardialdehyd gegerbten Fellen weisen die erfindungsgemäßen Felle eine deutlich hellere Farbe sowohl des Leders wie auch der Wolle und eine bessere Lichtechtheit auf. Im Aldehyd-Test DIN 53315 A sind die Messwerte gegenüber dem Stand der Technik deutlich reduziert und liegen unter der Nachweisgrenze der Methode von 20 ppm.

### B 2: Herstellung von Wet White für vollnarbiges Polsterleder

Gesalzene Rindshäute werden handelsüblich gewaschen, geäschert, enthaart, entfleischt, und gespalten. Das Blössenmaterial (2,7 mm) wird mit 200 % Wasser gewaschen und die Flotte abgelassen. Zur Entkälkung werden die Blössen in 30 % frischem Wasser mit 0,4 % Natriumbisulfit und 1,4 % eines N-freien Entkälkungsmittels (Decaltal® A-N, Produkt von BASF) 10 Minuten bewegt. Dann wird 0,15 % eines Fettalkoholethoxylat-basierten Entfettungsmittels zugegeben und für 1 h bei 25°C bewegt (pH 8,4). Dann werden 50% Wasser und 1 % eines Beizenzyms (Novobate 1547, Produkt von Novozyme) zugegeben und für 1 Stunde bewegt. Anschließend wird die Flotte abgelassen und die Blösse erneut gewaschen.

In 50 % frischer Flotte wird die Blösse 1 Stunde mit 0,25% Magnesiumoxid auf pH 9,5 konditioniert und mit 8 % des erfindungsgemäßen Produktes aus Beispiel A 4 versetzt (mit Wasser 1:1 verdünnt) versetzt (pH 8,3). Nach 3 Stunden wird durch Zugabe von 0,3 % Magnesiumoxid der pH der Flotte auf 9,0 bis 9,5 angehoben und die Schrumpftemperatur gemessen. Nach einer Laufzeit von 1 Stunde werden 0,2 % Magnesiumoxid und 0,1% einer wässrigen Ammoniak-Lösung (mit Wasser 1:5 verdünnt) zugegeben (nach 1 Stunde beträgt der pH 9,1) und das Fass bei 35 °C über Nacht bewegt (pH 9,2).

Zur Vorbereitung der Nachgerbung wird mit 0,6% Ameisensäure (mit Wasser 1:5 verdünnt) in 3 Portionen der pH auf 5,3 reduziert. Nach 90 Minuten wird die Flotte abgelassen. Die Wet-White-Leder werden gewaschen und abgewelkt. Die Schrumpftemperatur wird erneut gemessen (77°C) und die Leder auf 1,0 mm gefalzt.

Analog werden weitere Versuche zur Beurteilung der Qualität der Gerbung durchgeführt. Einige der Ergebnisse sind in der folgenden Tabelle zusammengefasst:

| Produkt | Ts (°C) | Narbenbild | Griff | Abwelkbarkeit | Falzbarkeit |
|---|---|---|---|---|---|
| (Vergleich 1) | 70 | Narbenzug | leicht fettig | Noch akzeptabel | Noch akzeptabel |
| (Vergleich 2) | 73 | Narbenzug | leicht fettig | Noch akzeptabel | Noch akzeptabel |
| A1 | 76 | glatt | trocken, fest | sehr gut | sehr gut |
| A2 | 77 | glatt | trocken, fest | sehr gut | sehr gut |
| A3 | 76 | glatt | trocken, fest | sehr gut | sehr gut |
| A4 | 77 | glatt | trocken, fest | sehr gut | sehr gut |
| A5 | 79 | glatt | trocken, fest | sehr gut | sehr gut |
| A6 | 77 | glatt | trocken, fest | sehr gut | sehr gut |
| A7 | 76 | glatt | trocken, fest | sehr gut | sehr gut |
| A8 | 74 | glatt | trocken, fest | sehr gut | gut |
| A9 | 73 | Glatt | trocken, fest | sehr gut | gut |
| A10 | 77 | Glatt | trocken, fest | sehr gut | sehr gut |
| A11 | 74 | Glatt | trocken, fest | gut | gut |
| A12 | 75 | Glatt | trocken, fest | sehr gut | sehr gut |
| A13 | 78 | Glatt | trocken, fest | sehr gut | sehr gut |
| A14 | 75 | Glatt | trocken, fest | sehr gut | gut |
| A15 | 76 | Glatt | trocken, fest | sehr gut | sehr gut |
| A16 | 78 | Glatt | trocken, fest | sehr gut | sehr gut |
| A17 | 78 | Glatt | trocken, fest | sehr gut | sehr gut |

| | | | | | |
|---|---|---|---|---|---|
| Ts = Schrumpftemperatur in °C; Wet White: Chromfrei gegerbtes Leder-Zwischenprodukt zur mechanischen Behandlung und weiteren (Nach-)Gerbung. | | | | | |

### B 3: Herstellung von Wet White für ein vollnarbiges Polsterleder

Gesalzene Rindshäute werden handelsüblich gewaschen, geäschert, enthaart, entfleischt, und gespalten. Das Blössenmaterial (2,7 mm) wird mit 200 % Wasser gewaschen und die Flotte abgelassen. Zur Entkälkung werden die Blössen in 30 % frischem Wasser mit 0,4 % Natriumbisulfit und 1,4 % eines N-freien Entkälkungsmittels (Decaltal A-N, Produkt von BASF) 10 Minuten bewegt. Dann wird 0,15 % eines Fettalkoholethoxylat-basierten Entfettungsmittels zugegeben und für 1 h bei 25°C bewegt (pH 8,4). Dann werden 50 % Wasser und 1 % eines Beizenzyms (Novobate® 1547, Produkt von Novozyme) zugegeben und für 1 Stunde bewegt. Anschliessend wird die Flotte abgelassen und die Blösse erneut gewaschen.

In 50 % frischer Flotte wird die Blösse 1 Stunde mit 0,25% Magnesiumoxid auf pH 9,5 konditioniert und mit 8 % des erfindungsgemäßen Produktes aus Beispiel A 4 versetzt (mit Wasser 1:1 verdünnt) versetzt (pH 8,7). Nach 1 h Penetrationszeit werden 2,0 % eines 4,4'-Dihydroxy-diphenylsulfon / Naphthalinsulfonsäure / Formaldehyd-Kondensats (z.B. TANIGAN® BN, Produkt von LANXESS) und 1% des Formaldehyd-Kondensats aromatischer Sulfonsäuren (z.B. TANIGAN® PR, Produkt von Lanxess) zugegeben. Nach weiteren 2 Stunden (pH 7,8) werden 0,2 % Magnesiumoxid und 0,1 % einer wässsrigen Ammoniaklösung (mit Wasser 1:5 verdünnt) zugegeben (pH nach 1 Stunde 9,0) und die Schrumpftemperatur gemessen. Das Fass wird bei 35 °C über Nacht bewegt (pH 8,9).

Zur Vorbereitung der Nachgerbung wird mit 0,6% Ameisensäure (mit Wasser 1:5 verdünnt) in 3 Portionen der pH auf 5,3 reduziert. Nach 90 Minuten wird die Flotte abgelassen. Die Wet-White-Leder werden gewaschen und abgewelkt. Die Schrumpftemperatur wird erneut gemessen (76°C) und die Leder auf 1,0 mm gefalzt.

### B 4: Herstellung von Wet white für ein Polsterleder:

Gesalzene Rindshäute werden handelsüblich gewaschen, geäschert, enthaart, entfleischt, und gespalten. Das Blössenmaterial (2,7 mm) wird mit 200 % Wasser gewaschen und die Flotte abgelassen. Zur Entkälkung werden die Blössen in 30 % frischem Wasser mit 0,4 % Natriumbisulfit und 1,5 % eines N-freien Entkälkungsmittels (Decaltal® A-N, Produkt von BASF) 10 Minuten bewegt. Dann wird 0,15 % eines Fettalkoholethoxylat-basierten Entfettungsmittels zugegeben und für 90 Minuten bei 25°C bewegt (pH 8,5). Dann werden 50 % Wasser und 1 % eines Beizenzyms (Novobate® 1547, Produkt von Novozyme) zugegeben und für 45 Minuten bewegt. Anschließend wird die Flotte abgelassen und die Blösse erneut gewaschen.

Die vorbereitete Blösse wird in 50 % Flotte mit 1% Natriumacetat und 1 % Natriumcarbonat auf pH 9,9 konditioniert und dann mit 8,0 % des erfindungsgemäßen Produktes aus Beispiel A 4 (mit Wassser 1:1 verdünnt) versetzt (pH 8,6). Nach 30 Minuten Penetrationszeit werden 4 % eines 4,4'-Dihydroxydiphenylsulfon /Naphthalinsulfonsäure / Formaldehyd-Kondensats (z.B. TANIGAN® BN, Produkt von LANXESS) und 2% eines Formaldehyd-Kondensats aromatischer Sulfonsäuren (z.B. TANIGAN® PR, Produkt von LANXESS) (Zugabe als 50%ige Lösungen, pH 7) zugegeben. Nach 1 Stunde (pH 8,2) wird durch portionsweise Zugabe von insgesamt 1% Natriumcarbonat (mit Wasser 1:10 verdünnt) innerhalb von 2 Stunden der pH der Flotte auf 8,7 angehoben und die Schrumpftemperatur gemessen. Das Leder wird anschließend bei 30 °C über Nacht bewegt (pH 8,1).

Zur Vorbereitung der Nachgerbung wird mit 0,6 % Ameisensäure (mit Wasser verdünnt 1:10) in 3 Portionen der pH auf 7,2 reduziert, die Flotte abgelassen und die Wet-White-Leder abgewelkt. Die Schrumpftemperatur wird gemessen (70 °C) und die Leder auf 1,0 mm Stärke gefalzt.

### B 5: Herstellung von Wet White für Schuhoberleder

Gesalzene Rindshäute werden handelsüblich gewaschen, geäschert, enthaart, entfleischt, und gespalten. Das Blössenmaterial (2,6 mm) wird mit 200% Flotte gewaschen und die Flotte abgelassen. Zur Entkälkung werden die Blössen im Fass in 100 % Flotte und 0,3 % Natriumbisulfit, 1,0 % eines N-freien Entkälkungsmittels (z.B. Decaltal® ES-N, Produkt von BASF) sowie 0,3 % einer Mischung von Dicarbonsäuren (z.B. Bascal® S, Produkt von BASF) für 1 Stunde bei 25°C bewegt. Bei pH 7,7 werden 1 % eines Beizenzyms (Novobate 1547, Produkt von Novozyme) und 0,1 % eines Fettalkoholethoxylat-basierten Entfettungsmittels zugegeben, für weitere 45 Minuten bewegt und die Flotte anschließend abgelassen und die Blösse zweimal gewaschen.

Die vorbereitete Blösse wird 1 Stunde mit 1 % Natriumacetat auf pH 8,0 konditioniert und mit 2 % des erfindungsgemäßen Produktes aus Beispiel A 4 (mit Wasser 1:1 verdünnt) versetzt. Nach 20 Minuten Penetrationszeit werden 0,2 % Natriumcarbonat (mit Wasser 1:10 verdünnt) zugegeben und 30 Minuten bewegt. Dann werden weitere 4 % des erfindungsgemäßen Produktes aus Beispiel A 4 (mit Wasser 1:1 verdünnt) zugegeben. Nach 1,5 Stunden wird durch portionsweise Zugabe von insgesamt 0,4 % Natriumcarbonat (mit Wasser 1:10 verdünnt) innerhalb von 2 Stunden der pH auf 8,2 angehoben und die Schrumpftemperatur gemessen. Dann wird 0,1% NH3-Lösung (mit Wasser 1:5 verdünnt) zugegeben und das Fass bei 35 °C über Nacht bewegt. Dann wird mit Ameisensäure (mit Wasser 1:10 verdünnt) der pH auf 7,0 reduziert. Man gibt dann 3,0 % eines 4,4'-Dihydroxydiphenylsulfon-basierten Gerbstoffs (z.B. TANIGAN® HO, Produkt von Lanxess) hinzu und bewegt das Fass für 2 Stunden. Dann wird die Flotte abgelassen. Die Wet-White-Leder werden gewaschen und abgewelkt. Die Schrumpftemperatur wird erneut gemessen (72°C). Die Leder lassen sich ohne Probleme verarbeiten und werden auf eine Stärke von 1,2 mm gefalzt.

### B 6: Chromfrei gegerbte Autopolsterleder :

Die gefalzten Wet-White-Leder aus Beispiel B 4 werden mit 300 % Wasser (35°C) und 0,2 % eines Fettalkohol-Ethoxylates bei pH 7,6 20 Minuten bewegt. Nach Ablassen der Flotte werden 50 % Wasser, 3 % eines Naphthalinsulfonsäure / Formaldehyd-Kondensats (TANIGAN® RFS, Produkt von LANXESS), 1,5 % Natriumformiat und zur Vorfettung 3 % eines Lecithin-basierten Fettungsmittels (BAYKANOL® Licker SL, Produkt von Lanxess) (verdünnt mit Wasser 1:8) zugegeben. Nach einer Laufzeit von 30 Minuten werden 2% einer Polyacrylat-Dispersion (LEUKOTAN® 1084, Produkt von Dow/Lanxess) (verdünnt mit Wasser 1:3) und nach weiteren 10 Minuten 3% einer modifizierten Polyamidcarbonsäure (LEVOTAN® L, Produkt von Lanxess) (verdünnt mit Wasser 1:3) als füllende und weichmachende Nachgerbstoffe zugegeben. Nach weiteren 10 Minuten Laufzeit werden 8 % Tara und 5 % eines synthetischen Gerbstoffs basierend auf einem 4,4'-Dihydroxydiphenylsulfon / Naphthalinsulfonsäure / Formaldehyd-Kondensat (TANIGAN® BN, Produkt von LANXESS) und nach 30 Minuten (pH 5,5) noch 8 % Mimosa und weitere 5% eines synthetischen Gerbstoffs basierend auf einem 4,4'-Dihydroxydiphenylsulfon / Naphthalinsulfonsäure / Formaldehyd-Kondensat (TANIGAN® BN, Produkt von LANXESS) zugegeben. Dann wird 2 Stunden mit 3 % Farbstoff gefärbt (pH 5,5 - 5,8). Nach Aufflotten mit 50 % Wasser werden weitere 4 % eines Lecithin-basierten Fettungsmittels (BAYKANOL® Licker SL, Produkt von Lanxess) (verdünnt mit Wasser 1:8) zugegeben und bei 50°C 1 Stunde gewalkt Dann wird durch Zugabe von 2 % Ameisensäure (verdünnt mit Wasser 1:5) in 2 Portionen 45 Minuten fixiert (pH 4) und die Flotte abgelassen. Es wird mit 200 % Wasser (50°C) gewaschen.

In frischer Flotte (100 % Wasser, 50°C) wird mit 4 % eines Lecithin-basierten Fettungsmittels (BAYKANOL® Licker SL, Produkt von Lanxess) (verdünnt mit Wasser 1:8) bei einer Laufzeit von 1 Stunde die Top-Fettung durchgeführt. Dann wird mit 1 % Ameisensäure (verdünnt mit Wasser 1:5) in 2 Schritten auf pH 3,4 angesäuert und 45 Minuten fixiert. Dann wird die Flotte abgelassen, zweimal mit 200 % Wasser gewaschen und das Leder handelsüblich durch Ausrecken, Vakuumtrocknung (50°C), Hängetrocknung, Stollen, Millen, Stollen fertig gestellt.

Man erhält sehr weiche und trotzdem festnarbige, egal gefärbte Crustleder mit einem sehr gleichmäßigen Millkorn, die sich ausgezeichnet zurichten lassen.

### B 7: Chromfrei gegerbte Schuhoberleder:

Die gefalzten Wet-White-Leder aus Beispiel B 5 werden bei 35 °C in 150 % Flotte mit 0,3% Ameisensäure (mit Wasser verdünnt 1:10) für 20 Min. gewaschen (pH 4,3) und die Flotte abgelassen.

In frischer Flotte (100 % Wasser 30°C) wird zur Vorfettung mit einer Mischung aus 2 % eines synthetischen Fettungsmittels und 1 % eines Lecithin-basierten Fettungsmittels (verdünnt mit Wasser 1:8) und 5% eines 4,4'-Dihydroxydiphenylsulfon-basierten Gerbstoffs (TANIGAN® 3LN, Produkt von Lanxess) behandelt. Nach 20 Minuten werden 10 % eines Dihydroxydiphenylsulfon / Naphthalinsulfonsäure / Formaldehyd -Kondensats (TANIGAN® CF liquid, Produkt von LANXESS) (verdünnt mit Wasser 1:1) in 2 Portionen zugegeben und 45 Minuten eingewalkt (pH 4,5). Dann werden 70 % Wasser und 2 % eines Dispergiermittels auf Basis aromatischer Sulfonsäuren (TANIGAN® PAK, Produkt von Lanxess) zugegeben. Nach einer Laufzeit von 15 Minuten werden zunächst 4% einer modifizierten Polyamidcarbonsäure (LEVOTAN LB, Produkt von Lanxess) (verdünnt mit Wasser 1:3) und 3% einer Polyacrylat-Dispersion (LEUKOTAN® 8090, Produkt von Dow/Lanxess) zugegeben. Nach weiteren 20 Minuten wird eine Mischung aus 3% eines synthetischen und 2% eines Lecithin-basierten Fettungsmittels (BAYKANOL® Licker FSU und SL, Produkte von Lanxess) (verdünnt mit Wasser 1:5) zugegeben und nach weiteren 15 Minuten eine Mischung aus 5% Mimosa und 12 % von synthetischen Gerbstoffen basierend auf 4,4'-Dihydroxydiphenylsulfon / Formaldehyd-Kondensaten (TANIGAN® VR, TANIGAN® 3LN, Produkte von LANXESS) zugegeben. Nach einer Laufzeit von 30 Minuten wird mit 12% einer Mischung aus Kastanie gesüsst und synthetischen Gerbstoffen basierend auf einem Dihydroxydiphenylsulfon / Naphthalinsulfonsäure / Formaldehyd-Kondensat (TANIGAN VR, Produkt von LANXESS) und einem Harzgerbstoff (RETINGAN® ZF Plus, Produkt von Lanxess) in Gegenwart von 1 % Farbstoff und 2% eines Färbereihilfsmittels (BAYKANOL® TF-2N, Produkt von Lanxess) ausgegerbt und gefärbt.

Am nächsten Morgen wird nach Zugabe von 100% Wasser (50 °C) mit einer Mischung aus 3 % eines Lecithin-basierten Fettungsmittels, 3% eines Lanolin-basierten Fettungsmittels (BAYKANOL® Licker LA, Produkt von Lanxess), 2 % eines synthetischen Fettungsmittels (BAYKANOL® Licker SL, FSU, Produkte von Lanxess,) sowie 1% Klauenöl (z.B. Atlas Neatsfoot® Oil 30 CT) (verdünnt mit Wasser 1:5) eine Top-Fettung durchgeführt. Nach einer Laufzeit von 60 Minuten wird mit 3 % Ameisensäure (verdünnt mit Wasser 1:10) in 3 Portionen innerhalb von 80 Minuten fixiert (pH 3,6) und die Flotte abgelassen. Die Leder werden gewaschen und handelsüblich fertig gestellt.

Man erhält sehr weiche und trotzdem festnarbige, egal gefärbte Crustleder mit einem sehr gleichmäßigen Millkom, die sich ausgezeichnet zurichten lassen.

### C: Herstellung von Wet white für Brandsohlenleder:

Gesalzene Rindshäute werden handelsüblich gewaschen, geäschert, enthaart, entfleischt, und gespalten. Das Blössenmaterial (2,7 mm) wird mit 150 % Wasser gewaschen und die Flotte abgelassen. Zur Entkälkung werden die Blössen in 30 % frischem Wasser mit 0,2 % Natriumbisulfit und 0,5 % eines N-freien Entkälkungsmittels (Blancorol CGA, Produkt von LANXESS) 10 Minuten bewegt. Dann wird 0,1 % eines Fettalkoholethoxylat-basierten Entfettungsmittels zugegeben und für 90 Minuten bei 25°C bewegt (pH 8,5). Anschließend wird die Flotte abgelassen und die Blösse erneut gewaschen.

Die vorbereitete Blösse wird in 50 % Flotte auf pH 8 konditioniert und dann mit 6,0 % des erfindungsgemäßen Produktes aus Beispiel A 4 (mit Wassser 1:1 verdünnt) versetzt (pH 7,55). Nach 2 Stunden (pH 7,55) werden 0,3 % Natriumcarbonat (mit Wasser 1:10 verdünnt) zugegeben. Nach weiteren 60 Minuten (pH 8,0) werden nochmals 0,3% Natriumcarbonat (mit Wasser 1:10 verdünnt) zugegeben (pH 8,2). Das Leder wird anschließend bei 40 °C über Nacht bewegt (pH 7,44). Die Schrumpftemperatur beträgt 74°C.

Am nächsten Morgen wenden 0,5 % eines Konservierungsmittels (Preventol U-TECH G, Produkt von LANXESS) zugesetzt. Nach einer Laufzeit von 20 Minuten werden 2 Portionen Ameisensäure (1:10 verdünnt) im Abstand von 20 Minuten in einer Menge von jeweils 0,4% dosiert. Man lässt das Fass 1 Stunde laufen (pH 4,5). Dann wird die Flotte abgelassen und gewaschen.

Die Leder werden abgewelkt und gefalzt. Die gefalzten Leder werden mit 200% Wasser bezogen auf Falzgewicht bei 30°C gewässert. Die Flotte wird abgelassen.

Dann werden, jeweils bezogen auf Falzgewicht, 100 % Wasser (30°C) und 20,0 % eines Syntans auf Basis von 4,4'-Dihydroxydiphenylsulfon und Naphthalinsulfonsäure (z.B. TANIGAN CF liquid) (1:2 verdünnt) zugegeben. Man lässt das Fass 90 Minuten laufen (pH 4,1). Dann wird mit 1,0 % Ameisensäure (1:10 verdünnt) 30 Minuten nachbehandelt (pH 3,5) und die Flotte abgelassen.

Die Leder werden wie üblich ausgereckt, 5 Minuten bei 50°C vakuumiert, am Spannrahmen getrocknet und wie üblich fertig gestellt.

Die ohne mineralische Gerbstoffe gegerbten Leder ergeben hervorragende Brandsohlenleder und sind auch für orthopädische und medizinische Schuhe sowie Kinderschuhe geeignet.

## Patentansprüche

1. Wässrige Zusammensetzung, enthaltend
a) wenigstens eine Carbamoylsulfonatgruppen-haltige Verbindung,
b) wenigstens ein nicht-ionisches, Estergruppen-haltiges, alkoxyliertes Polyol mit einem HLB-Wert von wenigstens 13 (b1) und/oder ein Alkylglycosid (b2) und
c) eine Hydroxy-polycarbonsäure oder deren Salze, vorzugsweise Citronensäure, Milchsäure und/oder Weinsäure,
**dadurch gekennzeichnet, dass** als Carbamoylsulfonatgruppen-haltigen Verbindungen der Komponente a) Umsetzungsprodukte aus organischen Polyisocyanaten und Bisulfit und/oder Disulfit eingesetzt werden.

2. Wässrige Zusammensetzung nach Anspruch 1, enthaltend
- 5 bis 50 Gew.-%, insbesondere 10 bis 40 Gew.-% der Carbamoylsulfonatgruppen-haltigen Verbindung der Komponente a) und
- 0,05 bis 5 Gew.-%, insbesondere 0,1 bis 2 Gew.-% der Verbindung der Komponente b), jeweils bezogen auf die Zusammensetzung.

3. Wässrige Zusammensetzung nach wenigstens einem der Ansprüche 1 oder 2, **dadurch gekennzeichnet, dass** das organische Polyisocyanat ein Polyisocyanat mit einer NCO-Funktionalität von 1,8 bis 4,2 ist und vorzugsweise ein Molgewicht von < 800 g/mol besitzt, insbesondere ein Polyisocyanat mit einer NCO-Funktionalität von 1,8 bis 2,5 und einem Molgewicht < 400 g/mol ist.

4. Wässrige Zusammensetzung nach wenigstens einem der Ansprüche 1 bis 3, **dadurch gekennzeichnet, dass** das organische Polyisocyanat ein Molekulargewicht von weniger als 400 g/mol und an Aliphaten oder Cycloaliphaten gebundene NCO-Gruppen aufweist, insbesondere 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-düsocyanatohexan (TMHI), 1,3- und 1,4-Diisocyanatohexan, 1,3- und 1,4-Diisocyanato-cyclohexan (CHDI) sowie beliebige Gemische dieser Isomeren, 1-Isocyanato-2-isocyanatomethyl-cyclopentan, 1,2-, 1,3- und 1,4- Bis(isocyanatomethyl)-cyclohexan sowie beliebige Gemische von Isomeren, 1,2-, 1,3- und 1,4- Bis(isocyanatoethyl)-cyclohexan sowie beliebige Gemische dieser Isomeren, 1,2-, 1,3- und 1,4- Bis(isocyanato-n-propyl)-cyclohexan sowie beliebige Gemische dieser Isomeren, 1-Isocyanatopropyl-4-isocyanatomethyl-cyclohexan und Isomere, 1-Isocyanato-3,3,5-trimethyl-5-isocyanatomethyl-cyclohexan (IPDI), 1-Isocyanato-1-methyl-4-isocyanatomethyl-cyclohexan (IMCI), 2,4'- und 4,4'-Diisocyanatodicyclohexyl-methan (H₁₂MDI) und Isomere, Dimeryl-diisocyanat (DDI), Bis(isocyanatomethyl)-bicyclo[2.2.1]heptan (NBDI), Bis(isocyanatomethyl)-tricyclo[5.2.1.0^{2,6}]decan (TCDDI) und Isomere und beliebige Gemische solcher Diisocyanate und Xylylendiisocyanate der Formeln

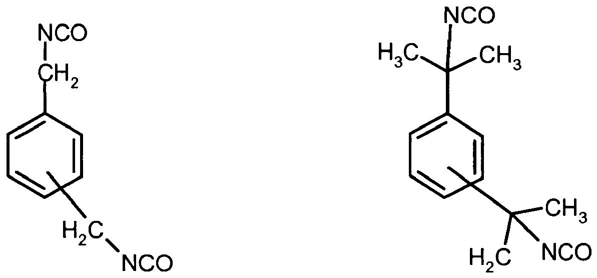

5. Wässrige Zusammensetzung nach wenigstens einem der Ansprüche 1 bis 4, **dadurch gekennzeichnet, dass** es sich bei der Verbindung der Komponente b1) um das Reaktionsprodukt eines Polyols mit wenigstens einem Alkylenoxid mit 2 bis 6 Kohlenstoffatomen, vorzugsweise in einer Menge von 10 bis 60 Mol-Äquivalenten, bezogen auf das Polyol und anschließender Umsetzung mit wenigstens einer Carbonsäure mit 6 bis 30 C-Atomen handelt.

6. Wässrige Zusammensetzung nach Anspruch 5, **dadurch gekennzeichnet, dass** es sich bei dem Polyol um ein Polyol aus der Gruppe bestehend aus Glycerin, Trimethylolpropan, Pentaerythrit, Dipentaerythrit, und von Mono- und Polysacchariden abgeleitete Polyole, insbesondere Sorbit und Polyole mit Sorbitan-Grundgerüst handelt.

7. Wässrige Zusammensetzung nach wenigstens einem der Ansprüche 1 bis 6, **dadurch gekennzeichnet, dass** es bei der Verbindung der Komponente b2) um Alkylmonoglucoside, Alkyldiglucoside, Alkyltriglucoside, oder höhere Homologe und deren Gemische handelt, deren Hydroxylgruppen partiell mit C₆-C₁₈-Alkylgruppen substituiert sind.

8. Wässrige Zusammensetzung nach wenigstens einem der Ansprüche 1 bis 7, **dadurch gekennzeichnet, dass** als weitere Zusatzstoffe Produkte aus den Gruppen der synthetischen Gerbstoffe, insbesondere Harzgerbstoffe, polymere Nachgerbstoffe und vegetabile Gerbstoffe, Fettungsmittel, Füllstoffe und/oder Puffersubstanzen enthalten sind.

9. Verfahren zur Herstellung der wässrigen Zusammensetzung nach wenigstens einem der Ansprüche 1 bis 8, das **dadurch gekennzeichnet ist, dass** man wenigstens ein organisches Polyisocyanat mit wenigstens einem Bisulfit und/oder Disulfit in Gegenwart von Wasser und der Komponente b) und der Komponente c) oder deren Salze umsetzt, und ggf. mit weiteren Zusatzstoffen versetzt.

10. Verfahren zur Herstellung von den erfindungsgemäßen wässrigen Zusammensetzungen nach wenigstens einem der Ansprüche 1 bis 8, das **dadurch gekennzeichnet ist, dass** man die Komponenten a), b) und c) oder deren Salze und gegebenenfalls weitere Zusatzstoffe mit Wasser mischt.

11. Verwendung von wässrigen Zusammensetzungen nach wenigstens einem der Ansprüche 1 bis 8 als Vorgerbstoffe oder Gerbstoffe von Häuten und Fellen.

12. Verfahren zum Gerben von Häuten oder Fellen, **dadurch gekennzeichnet, dass** man durch Waschen, Äschern, gegebenenfalls Enthaarung und Entkälken vorbehandelte Häute oder Felle mit der wässrigen Zusammensetzung nach wenigstens einem der Ansprüche 1 bis 7 behandelt.

13. Leder und Pelze hergestellt unter Verwendung einer Zusammensetzung gemäß Anspruch 1.

14. Verfahren zur Herstellung von Leder und/oder Pelzen **dadurch gekennzeichnet, dass** in wässriger Flotte bei einer Temperatur von 10 bis 60 °C und einem pH von 5 bis 10, bevorzugt 7 bis 9 vorbereitete Blössenmaterial mit 0,5 bis 10 %, bevorzugt 1 bis 4 %, bezogen auf den Anteil der Komponente a) der Zusammensetzung nach wenigstens einem der Ansprüche 1 bis 8 solange behandelt, bis man ein gegerbtes Zwischenprodukt mit einer Schrumpftemperatur von mindestens 65°C, bevorzugt mindestens 68°C, besonders bevorzugt mindestens 70°C erhält.

15. Carbamoylsulfonatgruppen-haltige Verbindungen, erhalten durch Umsetzung von wenigstens einem organischen Polyisocyanat mit wenigstens einem Bisulfit und/oder Disulfit und wenigstens einer Hydroxy-polycarbonsäure oder deren Salze, insbesondere Citronensäure, in Gegenwart eines ein nicht-ionisches, Estergruppen-haltigen, alkoxylierten Polyols mit einem HLB-Wert von wenigstens 13 (b1) und/oder eines Alkylglycosids (b2).

16. Verfahren zur Herstellung der Carbamoylsulfonatgruppen-haltige Verbindungen gemäß Anspruch 15, **dadurch gekennzeichnet**, das man wenigstens ein organisches Polyisocyanat mit wenigstens einem Bisulfit und/oder Disulfit in wässrigem Medium in Gegenwart eines nicht-ionisches, Estergruppen-haltigen, alkoxylierten Polyols mit einem HLB-Wert von wenigstens 13 (b1) und/oder eines Alkylglycosids (b2) und in Gegenwart einer Hydroxy-polycarbonsäure oder deren Salze, insbesondere Citronensäure, umsetzt.

## Claims

1. Aqueous composition containing
a) at least one compound containing carbamoylsulphonate groups,
b) at least one nonionic alkoxylated polyol containing ester groups and having an HLB value of at least 13 (b1) and/or alkylglycoside (b2) and
c) a hydroxy-polycarboxylic acid or salts thereof, preferably citric acid, lactic acid and/or tartaric acid
**characterized in that** reaction products formed from organic polyisocyanates and bisulphite and/or disulphite are used as the component a) compounds containing carbamoylsulphonate groups.

2. Aqueous composition according to Claim 1, containing
- 5 to 50 wt%, especially 10 to 40 wt% of the component a) compound containing carbamoylsulphonate groups and
- 0.05 to 5 wt%, especially 0.1 to 2 wt% of the compound of component b) all based on the composition.

3. Aqueous composition according to at least one of Claims 1 or 2, **characterized in that** the organic polyisocyanate is a polyisocyanate having an NCO functionality of 1.8 to 4.2 and preferably has a molecular weight of < 800 g/mol, especially a polyisocyanate having an NCO functionality of 1.8 to 2.5 and a molecular weight < 400 g/mol.

4. Aqueous composition according to at least one of Claims 1 to 3, **characterized in that** the organic polyisocyanate has a molecular weight of less than 400 g/mol and NCO groups attached to aliphatics or cycloaliphatics, especially 1,4-diioscyanatobutane, 1,6-diisocyanatohexane (HDI), 1,5-diisocyanato-2,2-dimethylpentane, 2,2,4- or 2,4,4-trimethyl-1,6-diisocyanatohexane (TMHI), 1,3- and 1,4-diisocyanatohexane, 1,3- and 1,4-diisocyanatocyclohexane (CHDI) and also any desired mixtures of these isomers, 1-isocyanato-2-isocyanatomethylcyclopentane, 1,2-, 1,3- and 1,4-bis(isocyanatomethyl)cyclohexane and also any desired mixtures of isomers, 1,2-, 1,3- and 1,4-bis(isocyanatoethyl)cyclohexane and also any desired mixtures of these isomers, 1,2-, 1,3- and 1,4-bis(isocyanato-n-propyl)cyclohexane and also any desired mixtures of these isomers, 1-isocyanatopropyl-4-isocyanatomethylcyclohexane and isomers, 1-isocyanato-3,3,5-trimethyl-5-isocyanatomethylcyclohexane (IPDI), 1-isocyanato-1-methyl-4-isocyanatomethylcyclohexane (IMCI), 2,4'- and 4,4'-diisocyanatodicyclohexylmethane (H₁₂MDI) and isomers, dimeryl diisocyanate (DDI), bis(isocyanatomethyl)bicyclo[2.2.1]heptane (NBDI), bis(isocyanatomethyl)tricyclo[5.2.1.0^{2,6}]decane (TCDDI) and isomers and any desired mixtures of such diisocyanates and xylylenediisocyanates of the formulae

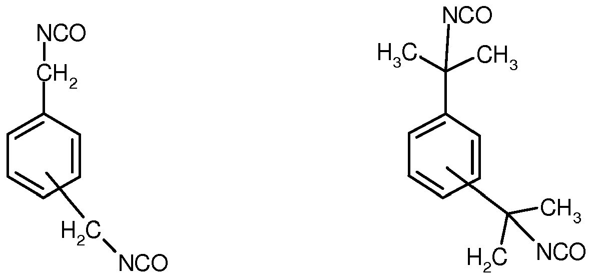

5. Aqueous composition according to at least one of Claims 1 to 4, **characterized in that** the compound of component b1) is the reaction product of a polyol with at least one alkylene oxide of 2 to 6 carbon atoms, preferably in an amount of 10 to 60 mol equivalents, based on the polyol and subsequent reaction with at least one carboxylic acid of 6 to 30 carbon atoms.

6. Aqueous composition according to Claim 5, **characterized in that** the polyol is a polyol from the group consisting of glycerol, trimethylolpropane, pentaerythritol, dipentaerythritol and polyols derived from mono- and polysaccharides, especially sorbitol and polyols with sorbitan core scaffold.

7. Aqueous composition according to at least one of Claims 1 to 6, **characterized in that** the compound of component b2) comprises alkylmonoglucosides, alkyldiglucosides, alkyl-triglucosides, or higher homologues and mixtures thereof, the hydroxyl groups of which are partially substituted with C₆-C₁₈-alkyl groups.

8. Aqueous composition according to at least one of Claims 1 to 7, **characterized in that** products from the groups of synthetic tanning agents, especially resin tanning agents, polymeric retanning agents and vegetable tanning agents, fatliquoring agents, fillers and/or buffer substances are contained as further added substances.

9. Process for producing the aqueous composition according to at least one of Claims 1 to 8, which process is **characterized in that** at least one organic polyisocyanate is reacted with at least one bisulphite and/or disulphite in the presence of water and component b) and component c) or salts thereof and optionally admixed with further added substances.

10. Process for producing the invention aqueous compositions according to at least one of Claims 1 to 8, which is **characterized in that** the components a), b) and c) or salts thereof and optionally further added substances are mixed with water.

11. Use of aqueous compositions according to at least one of Claims 1 to 8 as pretanning or tanning agents for hides and skins.

12. Process for tanning hides or skins, **characterized in that** hides or skins pretreated by washing, liming, optionally unhairing and deliming are treated with the aqueous composition according to at least one of Claims 1 to 7.

13. Leathers and furs obtained using a composition according to Claim 1.

14. Process for producing leather and/or furs, **characterized in that** prepared pelt material is treated in aqueous float at a temperature of 10 to 60°C and a pH of 5 to 10, preferably 7 to 9 with 0.5 to 10%, preferably 1 to 4%, based on the proportion of component a) of the composition according to at least one of Claims 1 to 8, until a tanned intermediate product having a shrinkage temperature of at least 65°C, preferably at least 68°C and more preferably at least 70°C is obtained.

15. Compounds containing carbamoylsulphonate groups, said compounds being obtained by reaction of at least one organic polyisocyanate with at least one bisulphite and/or disulphite and at least one hydroxy-polycarboxylic acid or salts thereof, especially citric acid, in the presence of a nonionic alkoxylated polyol containing ester groups and having an HLB of at least 13 (b1) and/or an alkyl glycoside (b2).

16. Process for preparing the compounds containing carbamoylsulphonate groups according to Claim 15, **characterized in that** at least one organic polyisocyanate is reacted with at least one bisulphite and/or disulphite in an aqueous medium in the presence of a nonionic alkoxylated polyol containing ester groups and having an HLB of at least 13 (b1) and/or an alkyl glycoside (b2) and in the presence of a hydroxy-polycarboxylic acid or salts thereof, especially citric acid.

## Revendications

1. Composition aqueuse, contenant
a) au moins un composé contenant des groupes carbamoylsulfonate,
b) au moins un polyol non ionique, contenant des groupes ester, alcoxylé, présentant une valeur BHL d'au moins 13 (b1) et/ou un alkylglycoside (b2) et
c) un acide hydroxypolycarboxylique ou ses sels, de préférence l'acide citrique, l'acide lactique et/ou l'acide tartrique,
**caractérisée en ce qu'**on utilise, comme composés contenant des groupes carbamoylsulfonate du composant a), des produits de transformation de polyisocyanates organiques et de bisulfite et/ou de disulfite.

2. Composition aqueuse selon la revendication 1, contenant
- 5 à 50% en poids, en particulier 10 à 40% en poids du composé contenant des groupes carbamoylsulfonate du composant a) et
- 0,05 à 5% en poids, en particulier 0,1 à 2% en poids du composé du composant b), à chaque fois par rapport à la composition.

3. Composition aqueuse selon au moins l'une quelconque des revendications 1 ou 2, **caractérisée en ce que** le polyisocyanate organique est un polyisocyanate présentant une fonctionnalité NCO de 1,8 à 4,2 et possède de préférence un poids molaire < 800 g/mole, en particulier un polyisocyanate présentant une fonctionnalité NCO de 1,8 à 2,5 et un poids molaire < 400 g/mole.

4. Composition aqueuse selon au moins l'une quelconque des revendications 1 à 3, **caractérisée en ce que** le polyisocyanate organique présente un poids moléculaire inférieur à 400 g/mole et des groupes NCO liés à des aliphates ou des cycloaliphates, en particulier le 1,4-diisocyanatobutane, le 1,6-diisocyanatohexane (HDI), le 1,5-diisocyanato-2,2-diméthylpentane, le 2,2,4-triméthyl-1,6-diisocyanatohexane ou le 2,4,4-triméthyl-1,6-diisocyanatohexane (TMHI), le 1,3-diisocyanatohexane et le 1,4-diisocyanatohexane, le 1,3-diisocyanatocyclohexane et le 1,4-diisocyanatocyclohexane (CHDI) ainsi que des mélanges quelconques de ces isomères, le 1-isocyanato-2-isocyanatométhylcyclopentane, le 1,2-bis(isocyanatométhyl)-cyclohexane, le 1,3-bis(isocyanatométhyl)-cyclohexane et le 1,4-bis(isocyanatométhyl)-cyclohexane ainsi que des mélanges quelconque des isomères, le 1,2-bis(isocyanatoéthyl)-cyclohexane, le 1,3-bis(isocyanatoéthyl)-cyclohexane et le 1,4-bis(isocyanatoéthyl)-cyclohexane ainsi que des mélanges quelconques de ces isomères, le 1,2-bis(isocyanato-n-propyl)-cyclohexane, le 1,3-bis(isocyanato-n-propyl)-cyclohexane et le 1,4-bis(isocyanato-n-propyl)-cyclohexane ainsi que des mélanges quelconques de ces isomères, le 1-isocyanatopropyl-4-isocyanatométhylcyclohexane et ses isomères, le 1-isocyanato-3,3,5-triméthyl-5-isocyanatométhylcyclohexane (IPDI), le 1-isocyanato-1-méthyl-4-isocyanatométhylcyclohexane (IMCI), le 2,4'-diisocyanatodicyclohexylméthane et le 4,4'-diisocyanatodicyclohexylméthane (H₁₂MDI) et les isomères, le diisocyanate de diméryle (DDI), le bis(isocyanatométhyl)-bicyclo[2,2,1]heptane (NBDI), le bis(isocyanatométhyl)-tricyclo[5,2,1,0^{2,6}]décane (TCDDI) et les isomères et des mélanges quelconques de ces diisocyanates et des xylylènediisocyanates des formules

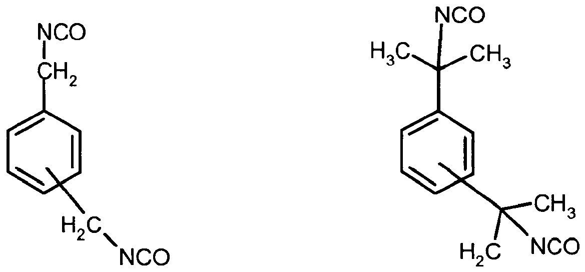

5. Composition aqueuse selon au moins l'une quelconque des revendications 1 à 4, **caractérisée en ce qu'**il s'agit, pour le composé du composant b1), du produit de réaction d'un polyol avec au moins un oxyde d'alkylène comprenant 2 à 6 atomes de carbone, de préférence en une quantité de 10 à 60 équivalents en mole, par rapport au polyol, puis transformé avec au moins un acide carboxylique comprenant 6 à 30 atomes de carbone.

6. Composition aqueuse selon la revendication 5, **caractérisée en ce qu'**il s'agit, pour le polyol, d'un polyol du groupe constitué par le glycérol, le triméthylolpropane, le pentaérythritol, le dipentaérythritol et les polyols dérivés de monosaccharides et de polysaccharides, en particulier le sorbitol et les polyols présentant une structure de base de sorbitane.

7. Composition aqueuse selon au moins l'une quelconque des revendications 1 à 6, **caractérisée en ce qu'**il s'agit, pour le composé du composant b2), d'alkylmonoglucosides, d'alkyldiglucosides, d'alkyltriglucosides ou d'homologues supérieurs et de leurs mélanges, dont les groupes hydroxyle sont substitués partiellement par des groupes C₆-C₁₈-alkyle.

8. Composition aqueuse selon au moins l'une quelconque des revendications 1 à 7, **caractérisée en ce qu'**elle contient, comme autres additifs, des produits des groupes des tannins synthétiques, en particulier des tannins résiniques, des produits polymères de retannage et des tannins végétaux, des agents de graissage, des charges et/ou des substances tampon.

9. Procédé pour la préparation de la composition aqueuse selon au moins l'une quelconque des revendications 1 à 8, **caractérisé en ce qu'**on transforme au moins un polyisocyanate organique avec au moins un bisulfite et/ou disulfite en présence d'eau et du composant b) et du composant c) ou leurs sels et on ajoute le cas échéant d'autres additifs.

10. Procédé pour la préparation de la composition aqueuse selon l'invention selon au moins l'une quelconque des revendications 1 à 8, **caractérisé en ce qu'**on mélange les composants a), b) et c) ou leurs sels et le cas échéant d'autres additifs avec de l'eau.

11. Utilisation de compositions aqueuses selon au moins l'une quelconque des revendications 1 à 8 comme prétannins ou tannins de peaux et de fourrures.

12. Procédé pour le tannage de peaux ou de fourrures, **caractérisé en ce qu'**on traite des peaux ou des fourrures prétraitées par lavage, chaulage, le cas échéant épilage et déchaulage avec la composition aqueuse selon au moins l'une quelconque des revendications 1 à 7.

13. Cuirs et peaux produits à l'aide d'une composition selon la revendication 1.

14. Procédé pour la production de cuirs et/ou de peaux, **caractérisé en ce qu'**on traite un matériau en tripe préparé dans un bain aqueux à une température de 10 à 60°C et à un pH de 5 à 10, de préférence de 7 à 9, avec 0,5 à 10%, de préférence de 1 à 4%, par rapport à la proportion du composant a), de la composition selon au moins l'une quelconque des revendications 1 à 8 jusqu'à ce qu'on obtienne un produit intermédiaire tanné présentant une température de retrait d'au moins 65°C, de préférence d'au moins 68°C, de manière particulièrement préférée d'au moins 70°C.

15. Composés contenant des groupes carbamoylsulfonate, obtenus par transformation d'au moins un polyisocyanate organique avec au moins un bisulfite et/ou disulfite et au moins un acide hydroxypolycarboxylique ou ses sels, en particulier l'acide citrique, en présence d'un polyol non ionique, contenant des groupes ester, alcoxylé présentant une valeur BHL d'au moins 13 (b1) et/ou d'un alkylglycoside (b2).

16. Procédé pour la préparation des composés contenant des groupes carbamoylsulfonate selon la revendication 15, **caractérisé en ce qu'**on transforme au moins un polyisocyanate organique avec au moins un bisulfite et/ou disulfite en milieu aqueux en présence d'un polyol non ionique, contenant des groupes ester, alcoxylé présentant une valeur BHL d'au moins 13 (b1) et/ou d'un alkylglycoside (b2) et en présence d'un acide hydroxypolycarboxylique ou ses sels, en particulier l'acide citrique.
